# EUROPEAN PATENT SPECIFICATION

(11) **EP 0 709 601 B1**
(45) Date of publication and mention of the grant of the patent: **12.02.2003**
(21) Application number: 95116043.1
(22) Date of filing: 11.10.1995
(51) Int. Cl.: F16H 61/06, F16H 61/20

(54) **Control system for automatic transmission**
Steuerungssystem für Automatikgetriebe
Système de commande pour transmission automatique

(30) Priority: 31.10.1994 JP 29057094
(43) Date of publication of application: 01.05.1996
(73) Proprietor: AISIN AW CO., LTD., Anjo-shi Aichi-ken (JP)
(72) Inventor: Iwata, Akihito, Anjo-shi, Aichi-ken, 444-11 (JP); Tsukamoto, Kazumasa, Anjo-shi, Aichi-ken, 444-11 (JP); Mikami, Kazuhiro, Anjo-shi, Aichi-ken, 444-11 (JP); Hayabuchi, Masahiro, Anjo-shi, Aichi-ken, 444-11 (JP); Yamamoto, Yoshihisa, Anjo-shi, Aichi-ken, 444-11 (JP)
(74) Representative: VOSSIUS & PARTNER

(56) References cited:
- EP-A- 0 681 123
- US-A- 4 648 289
- US-A- 4 804 074
- US-A- 4 840 092
- US-A- 4 879 925

## Description

The present invention relates to a control system for an automatic transmission.

In the prior art, the automatic transmission is constructed to comprise: a torque converter acting as a fluid transmission unit for receiving the rotation generated by an engine; and a speed change unit for changing the speed of the rotation transmitted from the torque converter. The speed change unit is equipped with a planetary gear unit composed of gear elements so that it changes the speed in accordance with the shift pattern which is set in advance according to the vehicle speed, the throttle opening and so on.

The automatic transmission is enabled to select ranges including a P (parking) range, an R (reverse) range, an N (neutral) range, a D (drive) range, an S (second) range and an L (low) range. If the range is changed from the N-range to the D-range by the shift lever, for example, the rotation of the engine in the idling state is transmitted through the torque converter to the gear change unit, to cause the creep phenomenon that the vehicle runs forward little by little without the accelerator pedal being depressed.

Therefore, the creep phenomenon is prevented by releasing a forward clutch, i.e., a first clutch to be applied at the forward running time of the speed change unit. In the prior art, therefore, the release of the first clutch is effected by reducing the oil pressure of the hydraulic servo of the first clutch when one of the D-range, the S-range and the L-range (as will be shortly referred to as the "forward running range") for moving the vehicle forward is selected but the vehicle is substantially in the stop state.

However, if the first clutch is released, the vehicle may run backward on an uphill road against the will of the driver. Thus, simultaneously as the first clutch is released, the hill-hold control is effected (as disclosed in U.S.P. No. 4,648,289).

In the hill-hold control, the shifting brake of the speed change unit is applied to block the backward rotation of the output shaft by the action of the one-way clutch thereby to prevent the vehicle from running backward.

In the control system for the automatic transmission of the prior art, however, for the hill-hold control, the time period for the piston of the hydraulic servo to move in the piston stroke is required before the application of the brake is started after the feed of the oil pressure to the hydraulic servo of the brake has been started. This causes a time lag till the hill-hold control becomes actually effective after the start of the application of the brake.

This time lag is longer than the time period after the start of the release of the first clutch and before the torque transmission is lowered by the start of the transfer of the first clutch from the applied state to the slipping state. Therefore, if the hill-hold control is started on an uphill road simultaneously with the establishment of the released state of the first clutch, the transfer of the first clutch to the slipping state may be started before the application of the brake is started to effect the hill-hold control actually, thereby to allow the vehicle to run backward.

Generally speaking, the driver often reduces his depression of the foot brake, because the creeping force acts uphill so that the vehicle can be stopped with a low depression of the foot brake. In this state, therefore, if the first clutch substantially fails to transmit the torque before the hill-hold control becomes effective, the vehicle may possibly move backward a short distance even with a constant foot braking force being kept.

Still the worse, if the application of the brake is started to effect the hill-hold control while the vehicle is moving backward, a shock is caused by the application of the brake.

US-A-4,879,925 discloses a hydraulic hill hold control system for an automatic transmission for a vehicle adapted for the purpose of hill hold, wherein the supply of hydraulic pressure to the brake is interlocked with the shifting of the hydraulic speed stage switching system, so that the brake is engaged only when the gear transmission mechanism is at a certain speed stage at which the brake is in any event engaged and therefore the engagement of the brake for hill hold does not interfere with the forward driving operation of the gear transmission mechanism.

US-A-4,804,074 relates to an automatic clutch control apparatus. The control apparatus for the automatic clutch of an automotive vehicle includes a pressure regulating valve for selectively connecting clutch actuating pressure to line pressure and a drain, and a control unit for controlling the pressure regulating valve. The control unit senses and/or calculates vehicle inclination, braking torque and engine drive torque. If the braking torque is smaller than a directionally adverse torque which attempts to move the vehicle in the adverse direction when the vehicle is propelled in the desired direction from rest on a grade, the control unit is operative to displace the pressure regulating valve in a direction which will connect the line pressure to the clutch, thereby increasing the dutch pressure to enlarge the clutch transfer torque.

The present invention has been conceived to solve the above-specified problems of the control system for the automatic transmission of the prior art and has an object to provide a control system for an automatic transmission, which can prevent the vehicle from moving backward due to a delay in the effect of the hill-hold control and from being encountered by the shock.

The object is achieved by the features of the claims.

According to an aspect of the present invention, the control system for an automatic transmission. comprises: a fluid transmission unit for transmitting the rotation of an engine to a speed change unit; a clutch adapted to be applied when a forward running range is selected; a one-way clutch adapted to be locked, when the clutch is applied, for establishing a forward first speed; a brake for locking the one-way clutch, when locked, to block the backward rotation of the output shaft of the speed change unit; a first hydraulic servo for applying the clutch when fed with an oil pressure; a second hydraulic servo for applying the brake when fed with an oil pressure; a vehicle speed corresponding value sensor for detecting a vehicle speed corresponding value changing in a manner to correspond the vehicle speed; and a control unit for controlling the oil pressures to be fed to the first hydraulic servo and the second hydraulic servo.

As a result, when the clutch is applied by feeding the oil pressure to the first hydraulic servo, the rotation of the engine is transmitted through the fluid transmission unit to the speed change unit so that the one-way clutch is locked to establish the forward 1st speed. On the other hand, when the oil pressure is fed to the second hydraulic servo to apply the brake, the one-way clutch is locked to block the backward rotation of the output shaft of the speed change unit.

Moreover, the control unit includes: vehicle speed corresponding value decision means for deciding whether or not the vehicle speed corresponding value has reached a set value; deceleration calculation means for calculating the deceleration of the vehicle on the basis of the vehicle speed corresponding value before having reached the set value; and vehicle stop estimation means for estimating the timing for the vehicle to stop on the basis of the deceleration, if it is decided that the vehicle speed corresponding value has reached the set value.

As a result, if the vehicle speed corresponding value detected by the vehicle speed corresponding value sensor reaches the set value, the deceleration of the vehicle is calculated on the basis of the vehicle speed corresponding value before having reached the set value, so that the timing for the vehicle to stop is estimated on the basis of the deceleration.

The control unit further includes: oil pressure feed means for starting the feed of the oil pressure to the second hydraulic servo at a set timing, if the forward running range is selected, if the engine is in an idling state and if the foot brake is in an active state, and for ending the movement of the piston in the piston stroke of the second hydraulic servo at and after the timing estimated by the vehicle stop estimation means; and pressure reducing means for starting the pressure reduction of the first hydraulic servo at a set timing and starting the shift of the applied state to the slipping state of the clutch at and after the timing, in which the movement of the piston in the piston stroke of the second hydraulic servo ends so that the application of the brake is started.

In this case, the feed of the oil pressure to the second hydraulic servo is started at a set timing, if the forward running range is selected, if the engine is in an idling state and if the foot brake is in an active state. The movement of the piston in the piston stroke of the second hydraulic servo is ended by the oil pressure feed means at and after the timing estimated by the vehicle stop estimation means.

On the other hand, the pressure reducing means starts the pressure reduction of the first hydraulic servo at the set timing, and starts the shift of the applied state to the slipping state of the clutch at and after the timing, in which the movement of the piston in the piston stroke of the second hydraulic servo ends so that the application of the brake is started.

As a result, if the establishment of the released state of the first clutch and the hill-hold control are simultaneously started on an uphill road, the transfer to the slipping state of the clutch is not started till the application of the brake is started to effect the hill-hold control actually, so that the vehicle can be prevented from running backward.

As a result, the application of the brake is not started to effect no hill-hold control during the backward movement of the vehicle so that the shock can be prevented.

Moreover, since the timing for the vehicle to stop is estimated on the basis of the deceleration, the brake is not applied during the run of the vehicle even if the deceleration of the vehicle fluctuates, so that the shock due to a shift to another gear stage can be prevented. Moreover, the start of the application of the brake can be made as soon as possible so that the start of the transfer to the slipping state of the clutch can be accordingly advanced. This can prevent the deterioration of the fuel consumption reducing effect and the vibration suppressing effect due to the released state of the first clutch.

According to still another aspect of the present invention, the control system for an automatic transmission, comprises: a fluid transmission unit for transmitting the rotation of an engine to a speed change unit; a clutch adapted to be applied when a forward running range is selected; a first one-way clutch adapted to be locked, when the clutch is applied, for establishing a forward first speed; a first brake for locking the one-way clutch, when locked, to block the backward rotation of the output shaft of the speed change unit, and for retaining a speed change member when applied at gear stages at forward 2nd or higher speeds; and a second brake arranged in parallel with the first brake for retaining the speed change member through a second one-way clutch.

The control system further comprises: a first hydraulic servo for applying the clutch when fed with an oil pressure; a second hydraulic servo for applying the brake when fed with an oil pressure; a third hydraulic servo for applying the second brake when fed with an oil pressure; a vehicle speed corresponding value sensor for detecting a vehicle speed corresponding value changing in a manner to correspond the vehicle speed; and a control unit for controlling the oil pressures to be fed to the first hydraulic servo and the second hydraulic servo.

As a result, when the clutch is applied by feeding the oil pressure to the first hydraulic servo, the rotation of the engine is transmitted through the fluid transmission unit to the speed change unit, so that the first one-way clutch is locked to establish the forward 1st speed. By feeding the oil pressure to the second hydraulic servo at the gear stages of forward 2nd or higher speeds, moreover, the first brake is applied to retain the speed change member. Still moreover, when the second brake is applied by feeding the oil pressure to the third hydraulic servo, the speed change member is retained through the second one-way clutch.

By applying the first brake and the second brake, on the other hand, the first one-way clutch is locked to block the backward rotation of the output shaft of the speed change unit.

Moreover, the control unit includes: vehicle speed corresponding value decision means for deciding whether or not the vehicle speed corresponding value has reached a set value; deceleration calculation means for calculating the deceleration of the vehicle on the basis of the vehicle speed corresponding value before having reached the set value; and vehicle stop estimation means for estimating the timing for the vehicle to stop on the basis of the deceleration, if it is decided that the vehicle speed corresponding value has reached the set value.

As a result, if the vehicle speed corresponding value detected by the vehicle speed corresponding value sensor reaches the set value, the deceleration of the vehicle is calculated on the basis of the vehicle speed corresponding value before having reached the set value, so that the timing for the vehicle to stop is estimated on the basis of the deceleration.

The control unit further includes: oil pressure feed means for starting the feed of the oil pressure to the third hydraulic servo at a set timing, if the forward running range is selected, if the engine is in an idling state and if the foot brake is in an active state, and for ending the movement of the piston in the piston stroke of the third hydraulic servo at and after the timing estimated by the vehicle stop estimation means; a sequence valve adapted to be switched in response to the rise of the oil pressure of the third hydraulic servo for starting the feed of the oil pressure to the second hydraulic servo at the timing in which the movement of the piston in the piston stroke of the third hydraulic servo ends; and pressure reducing means for starting the pressure reduction of the first hydraulic servo at a set timing and starting the shift of the applied state to the slipping state of the clutch at and after the timing, in which the movement of the piston in the piston stroke of the second hydraulic servo ends so that the application of the first brake is started.

In this case, the feed of the oil pressure to the third hydraulic servo is started at a set timing, if the forward running range is selected, if the engine is in an idling state and if the foot brake is in an active state. The movement of the piston in the piston stroke of the third hydraulic servo is ended at and after the timing estimated by the vehicle stop estimation means.

Subsequent to the end of the movement of the piston in the piston stroke of the third hydraulic servo, the feed of the oil pressure to the second hydraulic servo is started. Moreover, the pressure reduction of the first hydraulic servo is started at the set timing to end the movement of the piston in the piston stroke of the second hydraulic servo and to start the application of the first brake. Still moreover, the transfer of the clutch from the applied state to the slipping state is started at and after the timing in which the application of the first brake is started.

As a result, if the establishment of the released state of the first clutch and the hill-hold control are simultaneously started on an uphill road, the transfer to the slipping state of the clutch is not started till the application of the second brake is started to effect the hill-hold control actually, so that the vehicle can be prevented from running backward.

As a result, the application of the second brake is not started to effect no hill-hold control during the backward movement of the vehicle so that the shock can be prevented.

Moreover, since the timing for the vehicle to stop is estimated on the basis of the deceleration, the second brake is not applied during the run of the vehicle even if the deceleration of the vehicle fluctuates, so that the shock due to a shift to another gear stage can be prevented. Moreover, the start of the application of the second brake can be made as soon as possible so that the start of the transfer to the slipping state of the clutch can be accordingly advanced. This can prevent the deterioration of the fuel consumption reducing effect and the vibration suppressing effect due to the released state of the first clutch.

According to a further aspect of the present invention, control system for an automatic transmission, comprises: a fluid transmission unit for transmitting the rotation of an engine to a speed change unit; a clutch adapted to be applied when a forward running range is selected; a first one-way clutch adapted to be locked, when the clutch is applied, for establishing a forward first speed; a first brake for locking the one-way clutch, when locked, to block the backward rotation of the output shaft of the speed change unit, and for retaining a speed change member when applied at gear stages at forward 2nd or higher speeds; and a second brake arranged in parallel with the first brake for retaining the speed change member through a second one-way clutch.

The control system further comprises: a first hydraulic servo for applying the clutch when fed with an oil pressure; a second hydraulic servo for applying the brake when fed with an oil pressure; a third hydraulic servo for applying the second brake when fed with an oil pressure; a vehicle speed corresponding value sensor for detecting a vehicle speed corresponding value changing in a manner to correspond the vehicle speed; and a control unit for controlling the oil pressures to be fed to the first hydraulic servo and the second hydraulic servo.

As a result, when the clutch is applied by feeding the oil pressure to the first hydraulic servo, the rotation of the engine is transmitted through the fluid transmission unit to the speed change unit, so that the first one-way clutch is locked to establish the forward 1st speed. By feeding the oil pressure to the second hydraulic servo at the gear stages of forward 2nd or higher speeds, moreover, the first brake is applied to retain the speed change member. Still moreover, when the second brake is applied by feeding the oil pressure to the third hydraulic servo, the speed change member is retained through the second one-way clutch.

By applying the first brake and the second brake, on the other hand, the first one-way clutch is locked to block the backward rotation of the output shaft of the speed change unit.

Moreover, the control unit includes: vehicle speed corresponding value decision means for deciding whether or not the vehicle speed corresponding value has reached a set value; deceleration calculation means for calculating the deceleration of the vehicle on the basis of the vehicle speed corresponding value before having reached the set value; and vehicle stop estimation means for estimating the timing for the vehicle to stop on the basis of the deceleration, if it is decided that the vehicle speed corresponding value has reached the set value.

As a result, if the vehicle speed corresponding value detected by the vehicle speed corresponding value sensor reaches the set value, the deceleration of the vehicle is calculated on the basis of the vehicle speed corresponding value before having reached the set value, so that the timing for the vehicle to stop is estimated on the basis of the deceleration.

The control unit further includes: oil pressure feed means for starting the feed of the oil pressure to the third hydraulic servo at a set timing, if the forward running range is selected, if the engine is in an idling state and if the foot brake is in an active state, and for ending the movement of the piston in the piston stroke of the third hydraulic servo at and after the timing estimated by the vehicle stop estimation means; a sequence valve adapted to be switched in response to the rise of the oil pressure of the third hydraulic servo for starting the feed of the oil pressure to the second hydraulic servo at the timing in which the movement of the piston in the piston stroke of the third hydraulic servo ends; and pressure reducing means for starting the pressure reduction of the first hydraulic servo at a set timing and starting the shift of the applied state to the slipping state of the clutch at and after the timing, in which the movement of the piston in the piston stroke of the second hydraulic servo ends so that the application of the first brake is started.

In this case, the feeds of the oil pressures to the second hydraulic servo and the third hydraulic servo are started at a set timing, if the forward running range is selected, if the engine is in an idling state and if the foot brake is in an active state. The movements of the pistons in the piston strokes of the second hydraulic servo and the third hydraulic servo are ended at and after the timing estimated by the vehicle stop estimation means.

Moreover, the pressure reduction of the first hydraulic servo is started at the set timing to end the movements of the pistons in the piston strokes of the second hydraulic servo and the third hydraulic servo and to start the applications of the first brake and the second brake. Still moreover, the transfer of the clutch from the applied state to the slipping state is started at and after the timing in which the applications of the first brake and the second brake are started.

As a result, if the establishment of the released state of the first clutch and the hill-hold control are simultaneously started on an uphill road, the transfer to the slipping state of the clutch is not started till the applications of the first brake and the second brake are started to effect the hill-hold control actually, so that the vehicle can be prevented from running backward.

As a result, the applications of the first brake and the second brake are not started to effect no hill-hold control during the backward movement of the vehicle so that the shock can be prevented.

Moreover, since the timing for the vehicle to stop is estimated on the basis of the deceleration, the first brake and the second brake are not applied during the run of the vehicle even if the deceleration of the vehicle fluctuates, so that the shock due to a shift to another gear stage can be prevented. Moreover, the starts of the applications of the first brake and the second brake can be made as soon as possible so that the start of the transfer to the slipping state of the clutch can be accordingly advanced. This can prevent the deterioration of the fuel consumption reducing effect and the vibration suppressing effect due to the released state of the first clutch.
Fig. 1 is a block diagram showing the functions of a control system for an automatic transmission according to a first embodiment of the present invention;
Fig. 2 is a schematic diagram of an automatic transmission according to the first embodiment of the present invention;
Fig. 3 is a diagram tabulating the operations of an automatic transmission according to the first embodiment of the present invention;
Fig. 4 is a first diagram showing a hydraulic circuit of the automatic transmission according to the first embodiment of the present invention;
Fig. 5 is a second diagram showing a hydraulic circuit of the automatic transmission according to the first embodiment of the present invention;
Fig. 6 is a main flow chart showing the operations of the automatic transmission control unit according to the first embodiment of the present invention;
Fig. 7 is a flow chart of a first clutch release control subroutine in the first embodiment of the present invention;
Fig. 8 is a time chart of the first clutch release control subroutine in the first embodiment of the present invention;
Fig. 9 is a diagram illustrating relations between an engine R.P.M., and an input torque and a throttle pressure in the first embodiment of the present invention;
Fig. 10 is a flow chart of a vehicle speed zero estimate subroutine in the first embodiment of the present invention;
Fig. 11 is a first flow chart of an in-neutral control subroutine in the first embodiment of the present invention;
Fig. 12 is a diagram illustrating the state of a first clutch in a neutral control state in the first embodiment of the present invention;
Fig. 13 is a time chart illustrating an engine R.P.M., a clutch input side R.P.M. and a C-1 oil pressure at a neutral control time in the first embodiment of the present invention;
Fig. 14 is a diagram illustrating a relation between a throttle opening and a set value in the first embodiment of the present invention;
Fig. 15 is a flow chart of a 1st clutch apply control subroutine in the first embodiment of the present invention;
Fig. 16 is a time chart of an automatic transmission control unit in the first embodiment of the present invention;
Fig. 17 is a diagram showing a hydraulic circuit of an automatic transmission according to a second embodiment of the present invention;
Fig. 18 is a flow chart of a first clutch release control subroutine in the second embodiment of the present invention;
Fig. 19 is a time chart of the first clutch release control subroutine in the second embodiment of the present invention; and
Fig. 20 is a time chart of an automatic transmission control unit in the second embodiment of the present invention.

The present invention will be described in detail in the following in connection with its embodiments with reference to the accompanying drawings.

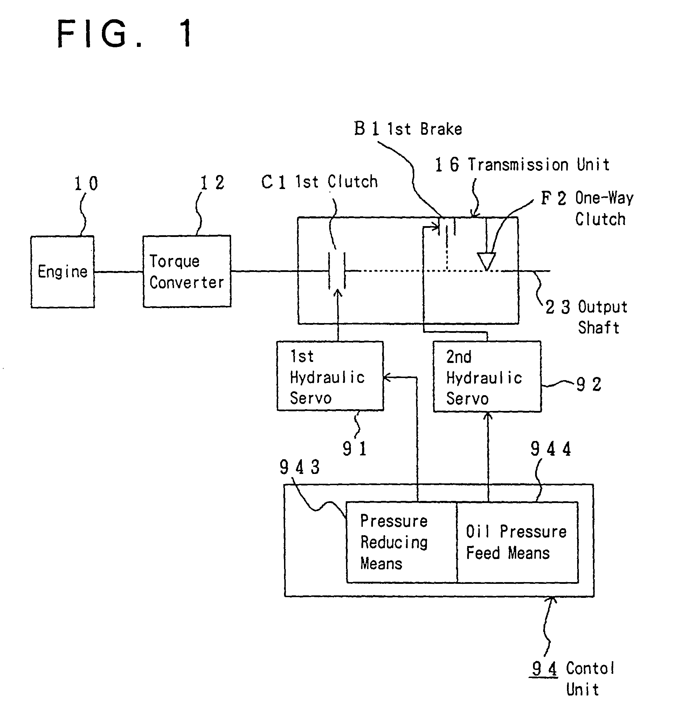

Fig. 1 is a block diagram showing the functions of a control system for an automatic transmission according to a first embodiment of the present invention.

As shown, the automatic transmission is constructed to comprise: a torque converter 12 acting as a fluid transmission unit for transmitting the rotation of an engine 10 to a speed change unit 16; a first clutch C1 acting as a clutch to be applied when a forward running range is selected; a one-way clutch F2 adapted to be locked, when the first clutch C1 is applied, to establish one forward speed; a first brake B1 acting as a brake for locking the one-way clutch F2, when applied, to block the backward rotation of an output shaft 23 of the speed change unit 16; a first hydraulic servo 91 for applying the first clutch C1 when fed with an oil pressure; a second hydraulic servo 92 for applying the first brake B1 when fed with an oil pressure; and a control unit 94 for controlling the oil pressure to be fed to the first hydraulic servo 91 and the second hydraulic servo 92.

Moreover, the control unit 94 is constructed to include: oil pressure feed means 944 for starting the feed of the oil pressure to the second hydraulic servo 92, if a forward running range is selected, if the vehicle is substantially in a stop state, if the engine 10 is in the idling state, and if the not-shown foot brake is in the active state; and pressure reducing means 943 for starting the reduction of the pressure of the first hydraulic servo 91 at a set timing and starting the shift of the first clutch C1 from an applied state to a slipping state when and after the movement of the not-shown piston of the second hydraulic servo 92 ends in the piston stroke so that the application of the first brake B1 is started.

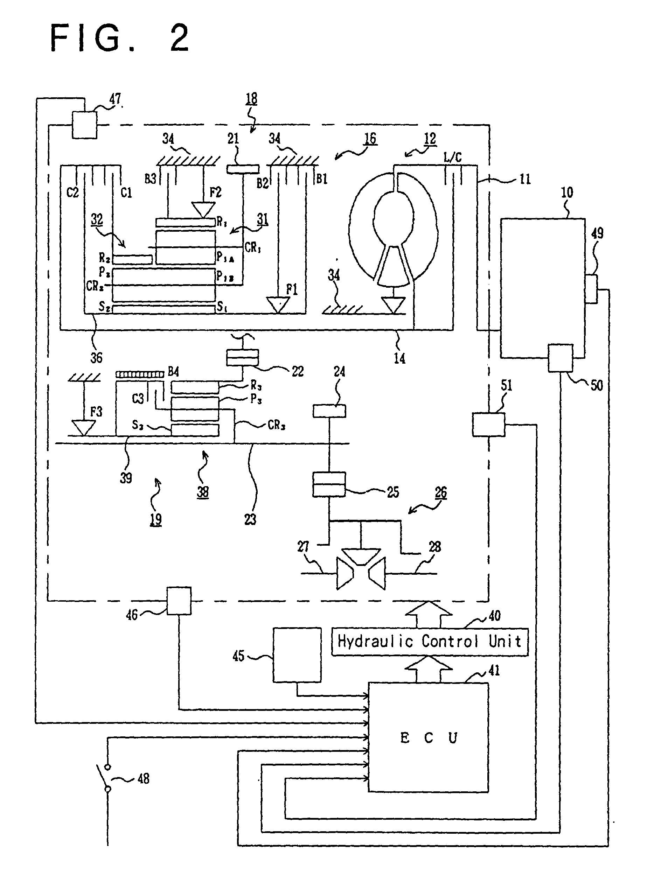

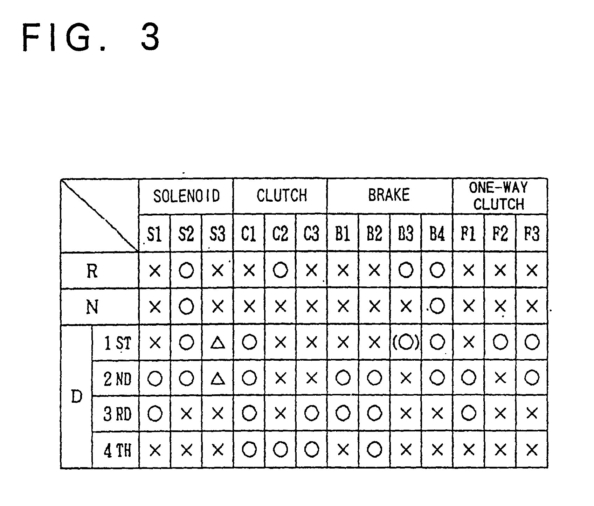

Fig. 2 is a schematic diagram of an automatic transmission according to the first embodiment of the present invention, and Fig. 3 is a diagram tabulating the operations of an automatic transmission according to the first embodiment of the present invention.

As shown, the rotation, as generated by the engine 10, is transmitted through an output shaft 11 to the torque converter 12 acting as the fluid transmission unit. The torque converter 12 transmits the rotation of the engine 10 to an output shaft 14 through a fluid (or working oil). However, if the vehicle speed exceeds a set value, a lockup clutch L/C is applied so that the rotation can be transmitted directly to the output shaft 14.

This output shaft 14 is connected to the speed change unit 16. This speed change unit 16 is constructed of a main transmission 18 for effecting three forward and one reverse gear stages, and an underdrive auxiliary transmission 19. Moreover, the rotation of the main transmission 18 is transmitted through a counter drive gear 21 and a counter driven gear 22 to the auxiliary transmission 19, the output shaft 23 of which has its rotation transmitted through an output gear 24 and a ring gear 25 to a differential unit 26.

In this differential unit 26, the rotation, as transmitted through the output gear 24 and the ring gear 25, is differentiated so that the differential rotations are transmitted through left and right drive shafts 27 and 28 to the not-shown drive wheels.

The main transmission 18 is equipped with not only a first planetary gear unit 31 and a second planetary gear unit but also a first clutch C1, a second clutch C2, a first brake B1 as a first brake, a second brake B2 as a second brake, a third brake B3, a one-way clutch F1 as a second one-way clutch, and a one-way clutch F2 as a first one-way clutch, all for transmitting the torque selectively between the individual components of the two planetary gear units 31 and 32.

The first planetary gear unit 31 is composed of: a ring gear R₁ connected to a drive unit case 34 through the third brake B3 and the one-way clutch F2, as arranged in parallel with each other; a sun gear S₁ formed on a sun gear 36 fitted on and rotatably supported by the output shaft 14; a carrier CR₁ connected to the counter drive gear 21; and pinions P_{1A} and P_{1B} interposed to mesh with each other between the ring gear R₁ and the sun gear S₁ and rotatably supported by the carrier CR₁.

Moreover, the sun gear 36 is connected through the second clutch C2 to the output shaft 14. This sun gear 36 is further connected through the first brake B1 to the drive unit case 34 and through the one-way clutch F1 and the second brake B2, as arranged in series with each other, to the drive unit case 34.

On the other hand, the second planetary gear unit 32 is composed of: a ring gear R₂ connected through the first clutch C1 to the output shaft 14; a sun gear S₂ formed on the sun gear 36 integrally with the sun gear S₁; a carrier CR₂ connected to the carrier CR₁; and a pinion P₂ interposed to mesh with the ring gear R₂ and the sun gear S₂, rotatably supported by the carrier CR₂ and formed integrally with the pinion P_{1B}.

Moreover, the counter drive gear 21 is in meshing engagement with the counter driven gear 22, as arranged in the auxiliary transmission 19, to transmit the rotation, whose speed is changed by the main transmission 18, to the auxiliary transmission 19.

This auxiliary transmission 19 is equipped with not only a third planetary gear unit 38 but also a third clutch C3, a fourth brake B4 and a one-way clutch F3 for transmitting the torque selectively between the individual components of the third planetary gear unit 38.

The third planetary gear unit 38 is composed of: a ring gear R₃ connected to the counter driven gear 22; a sun gear S₃ formed on a sun gear shaft 39 fitted rotatably on the output shaft 23; a carrier CR₃ fixed on the output shaft 23; and a pinion P₃ interposed to mesh with the ring gear R₃ and the sun gear S₃ and rotatably supported by the carrier CR₃.

Here will be described the operations of the automatic transmission thus constructed.

Incidentally, in Fig. 3: S1 - the first solenoid valve; S2 - the second solenoid valve; S3 - the third solenoid valve; C1 - the first clutch; C2 - the second clutch; C3 - the third clutch; B1 - the first brake; B2 - the second brake; B3 - the third brake; B4 - the fourth brake; and F1 to F3 - the one-way clutches. Moreover: R - an R-range; N - an N-range; D - a D-range; 1ST - a gear stage at the 1st speed; 2ND - a gear stage at the 2nd speed; 3RD - a gear stage at the 3rd speed; and 4TH - a gear stage at the 4th speed.

Moreover, symbols ○ indicate: that a first solenoid signal, a second solenoid signal and a third solenoid signal for opening/closing the first solenoid valve S1, the second solenoid valve S2 and the third solenoid valve S3, respectively, are ON; that the first clutch C1, the second clutch C2, the third clutch C3, the first brake B1, the second brake B2, the third brake B3 and the fourth brake B4 are applied; and that the one-way clutches F1 to F3 are locked. On the other hand, symbols X indicate: that the first solenoid signal, the second solenoid signal and the third solenoid signal for opening/closing the first solenoid valve S1, the second solenoid valve S2 and the third solenoid valve S3, respectively, are OFF; that the first clutch C1, the second clutch C2, the third clutch C3, the first brake B1, the second brake B2, the third brake B3 and the fourth brake B4 are released; and that the one-way clutches F1 to F3 are free.

Incidentally, symbols Δ indicate the ON/OFF of the third solenoid signal when the neutral control state is established, and a parenthesized circle (○) indicates that the third brake B3 is applied at an engine braking time.

At the 1st speed in the D-range, the first clutch C1 and the fourth brake B4 are applied to lock the one-way clutches F2 and F3. Then, the rotation of the output shaft 14 (Fig. 2) is transmitted through the first clutch C1 to the ring gear R₂. In this state, the rotation of the ring gear R₁ is blocked by the one-way clutch F2 so that the rotation of the carrier CR₂ is drastically decelerated, while rotating the sun gear S₂ idly, and is transmitted to the counter drive gear 21.

The rotation, as transmitted from the counter drive gear 21 to the counter driven gear 22, is transmitted to the ring gear R₃. However, the rotation of the sun gear S₃ is blocked by the fourth brake B4 so that the rotation of the carrier CR₃ is further decelerated and transmitted to the output shaft 23.

At the 2nd speed in the D-range, on the other hand, the first clutch C1, the first brake B1, the second brake B2 and the fourth brake B4 are applied to lock the one-way clutches F1 and F3. Then, the rotation of the output shaft 14 is transmitted through the first clutch C1 to the ring gear R₂, and the rotation of the sun gear S₂ is blocked by the second brake B2 and the one-way clutch F1. As a result, the rotation of the ring gear R₂ is decelerated and transmitted to the carrier CR₂, the rotation of which is transmitted to the counter drive gear 21 while rotating the ring gear R₁ idly.

The rotation, as transmitted from the counter drive gear 21 to the counter driven gear 22, is transmitted to the ring gear R₃. However, the rotation of the sun gear S₃ is blocked by the fourth brake B4 so that the rotation of the carrier CR₃ is decelerated and transmitted to the output shaft 23.

Next, at the 3rd speed in the D-range, the first clutch C1, the third clutch C3, the first brake B1 and the second brake B2 are applied to lock the one-way clutch F1. Then, the rotation of the output shaft 14 is transmitted through the first clutch C1 to the ring gear R₂, and the rotation of the sun gear S₂ is blocked by the second brake B2 and the one-way clutch F1. As a result, the rotation of the ring gear R₂ is decelerated and transmitted to the carrier CR₂ so that the rotation of the carrier CR₂ is transmitted to the counter drive gear 21 while rotating the ring gear R₁ idly.

The rotation, as transmitted from the counter drive gear 21 to the counter driven gear 22, is transmitted to the ring gear R3. However, the relative rotations of the carrier CR₃ and the sun gear S₃ are blocked by the third clutch C3 so that the third planetary gear unit 38 comes into a directly connected state. As a result, the rotation of the counter driven gear 22 is transmitted as it is to the output shaft 23.

Next, at the 4th speed in the D-range, the first clutch C1, the second clutch C2, the third clutch C3 and the second brake B2 are applied. Then, the rotation of the output shaft 14 is transmitted through the first clutch C1 to the ring gear R₂ and through the second clutch C2 to the sun gear S₂ so that the first planetary gear unit 31 and the second planetary gear unit 32 come into the directly connected state. As a result, the rotation of the output shaft 11 is transmitted as it is to the counter drive gear 21.

The rotation, as transmitted from the counter drive gear 21 to the counter driven gear 22, is transmitted to the ring gear R₃. However, the relative rotations of the carrier CR₃ and the sun gear S₃ are blocked by the third clutch C3 so that the third planetary gear unit 38 comes into the directly connected state. As a result, the rotation of the counter driven gear 22 is transmitted as it is to the output shaft 23.

Incidentally, the automatic transmission is arranged with the not-shown hydraulic circuit for applying/releasing the first clutch C1, the second clutch C2, the third clutch C3, the first brake B1, the second brake B2, the third brake B3 and the fourth brake B4, and the hydraulic circuit can be controlled by a hydraulic control unit 40. Moreover, this hydraulic control unit 40 is connected with an automatic transmission control unit (ECU) 41 so that it is controlled according to the control program of the electronic control unit 41. Incidentally, the hydraulic control unit 40 corresponds to the control unit 94 of Fig. 1.

With the automatic transmission control unit 41, on the other hand, there are connected a neutral start switch (N.S.S.W.) 45, an oil temperature sensor 46, an R.P.M. sensor 47, a brake switch 48, an engine R.P.M. sensor 49, a throttle opening sensor 50 and a vehicle speed sensor 51.

Thus: the shift position of the not-shown shift lever, i.e., the selected range can be detected by the neutral start switch 45; the temperature of the oil in the hydraulic circuit can be detected by the oil temperature sensor 46; and the R.P.M. of the input side of the first clutch C1, i.e., the R.P.M. of the output shaft 14 (as will be called the "clutch input side R.P.M.") N_{C1} can be detected by the R.P.M. sensor 47. Incidentally, the clutch input side R.P.M. N_{C1} indicates a vehicle speed corresponding value corresponding to the vehicle speed, and the R.P.M. sensor 47 constitutes a vehicle speed corresponding value sensor.

Moreover: whether or not the not-shown brake pedal is depressed can be detected by the brake switch 48; the engine R.P.M. N_{E} can be detected by the engine R.P.M. sensor 49; the throttle opening θ can be detected by the throttle opening sensor 50; and the vehicle speed can be detected by the vehicle speed sensor 51.

Here will be described the hydraulic circuit.

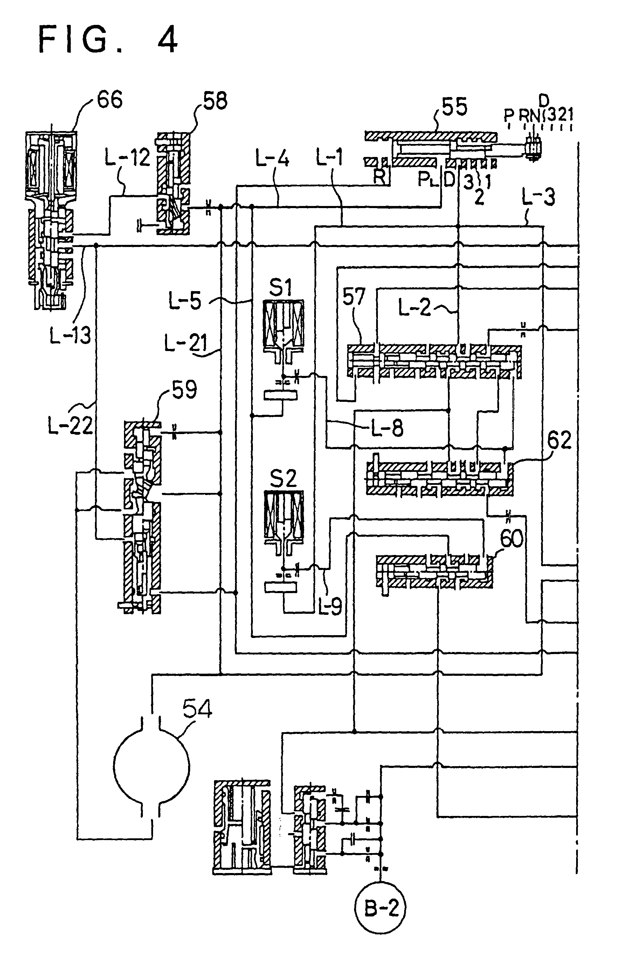

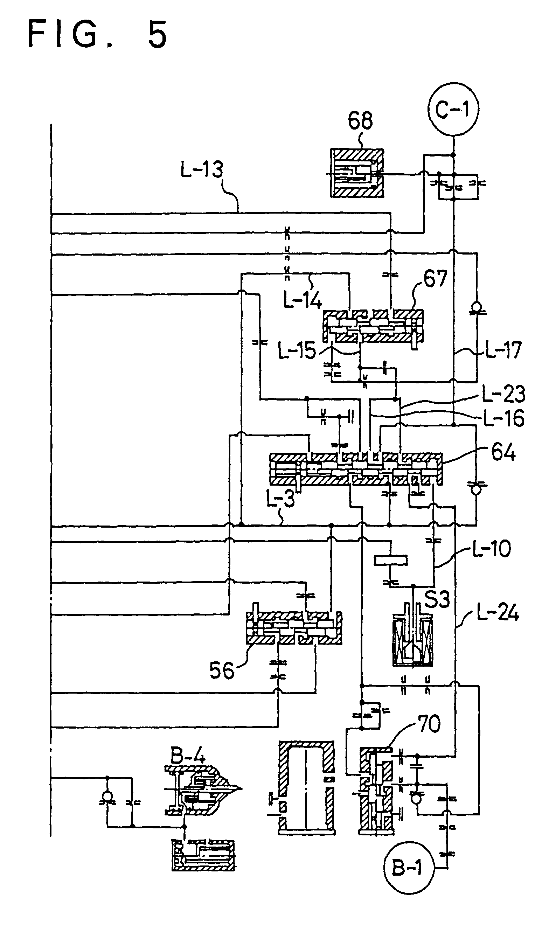

Fig. 4 is a first diagram showing a hydraulic circuit of the automatic transmission according to the first embodiment of the present invention, and Fig. 5 is a second diagram showing a hydraulic circuit of the automatic transmission according to the embodiment of the present invention.

In these Figures, a primary valve 59 adjusts the oil pressure coming from the an oil pressure source 54 and outputs the adjusted oil pressure as the line pressure to a line L-21. Moreover, a manual valve 55 is provided with ports 1, 2, 3, D, P_{L} and R so that the line pressure fed from the primary valve 59 via lines L-21 and L-4 to the port P_{L} is generated as the 1-range pressure, the 2-range pressure, the 3-range pressure, the D-range pressure and the R-range pressure, respectively, at the ports 1, 2, 3, D and R by operating the not-shown shift lever.

When the shift lever is placed in the forward drive position, the D-range oil pressure, as generated at the port D, is fed via a line L-1 to the second solenoid valve S2, via a line L-2 to a 1-2 shift valve 57 and via a line L-3 to a B-1 sequence valve 56. On the other hand, the line pressure from the primary valve 59 is fed via the line L-21 to the third solenoid valve S3.

Moreover, the line pressure from the line L-21 is fed via the line L-4 to a solenoid modulator valve 58 and further via a line L-5 to the first solenoid valve S1 and a 2-3 shift valve 60.

The first solenoid signal, the second solenoid signal and the third solenoid signal for opening/closing the first solenoid valve S1, the second solenoid valve S2 and the third solenoid valve S3 are turned ON/OFF in response to the signals coming from the hydraulic control unit 40 (Fig. 2), so that the first solenoid valve S1 feeds the signal oil pressure via a line L-8 to the 1-2 shift valve 57 and a 3-4 shift valve 62, the second solenoid valve S2 feeds the signal oil pressure via a line L-9 to the 2-3 shift valve 60, and the third solenoid valve S3 feeds the signal oil pressure via a line L-10 to a neutral relay valve 64.

The 1-2 shift valve 57 takes an upper half position (i.e., an upper position of the spool) at the 1st speed and a lower half position (i.e., a lower position of the spool) at the 2nd, 3rd and 4th speeds; the 2-3 shift valve 60 takes the lower half position at the 1st and 2nd speeds and the upper half position at the 3rd and 4th speeds; the 3-4 shift valve 62 takes the upper half position at the 1st and 4th speeds and the lower half position at the 2nd and 3rd speeds; and the neutral relay valve 64 takes the upper half position in the neutral control state and the lower half position at the 1st to 4th speeds.

The solenoid module valve 58 is connected via a line L-12 to a linear solenoid valve 66, which is connected via a line L-13 to a C-1 control valve 67. The linear solenoid valve 66 is further connected via a line L-22 to the primary valve 59.

In response to the signal from the hydraulic control unit 40, the linear solenoid valve 66 is controlled to feed a throttle pressure P_{TH} as the control oil pressure to the control valve 67. On the other hand, the C-1 control valve 67 is fed with the D-range pressure via the lines L-3 and L-14 so that it adjusts the fed D-range pressure to an oil pressure (as will be called the "C-1 oil pressure") P_{C1} of the hydraulic servo C-1, as accords to the throttle pressure P_{TH} coming from the linear solenoid valve 66 and feeds the adjusted oil pressure P_{C1} to a line L-15. Incidentally, the hydraulic servo C-1 corresponds to the first hydraulic servo 91 of Fig. 1.

The B-1 sequence valve 56 is arranged with a spring, as located at the left end, and is formed with a control oil chamber, as located at the right end. The spring applies its load to the spool. Moreover, the B-1 sequence valve 56 is fed at its control oil chamber with the D-range pressure via the line L-3 to take the lower half position at the 1st speed. When the oil pressure is fed at the 2nd speed to the hydraulic servo B-2 so that it rises, the B-1 sequence valve 56 is fed with the sequence pressure from the hydraulic servo B-2 so that it has its spool pushed to the right by the sequence pressure and the spring load to take the upper half position.

As a result, the oil pressure from the 1-2 shift valve 57 is fed through the B-1 sequence valve 56 to the 3-4 shift valve 62 and further through the 1-2 shift valve 57 and the neutral relay valve 64 to a hydraulic servo B-1. Thus, the hydraulic servo B-1 is fed with the oil pressure according to the rise of the oil pressure in the hydraulic servo B-2. Incidentally, the hydraulic servo B-1 corresponds to the second hydraulic servo 92 of Fig. 1.

Incidentally, the neutral relay valve 64 takes the upper half position when in the neutral control state. In this neutral control state, therefore, the C-1 oil pressure P_{C1}, as generated in the line L-15, is fed through a line L-16, the neutral relay valve 64 and a line L-17 to the hydraulic servo C-1. Moreover, the oil under the C-1 oil pressure P_{C1} is fed via lines L-23 and L-24 to a B-1 control valve 70.

Moreover, the neutral relay valve 64 takes the lower half position at the 1st to 4th speeds. At the 1st to 4th speeds, therefore, the oil under the D-range pressure is fed through the line L-3, the neutral relay valve 64 and the line L-17 to the hydraulic servo C-1. In the neutral control state, on the other hand, the neutral relay valve 64 is switched to the upper half position to connect the line L-16 and the line L-17.

Incidentally, numeral 68 designates a damper valve which is arranged in the line L-17 for smoothing the discharge of the oil from the hydraulic servo C-1, and characters B-4 a hydraulic servo of the fourth brake B4.

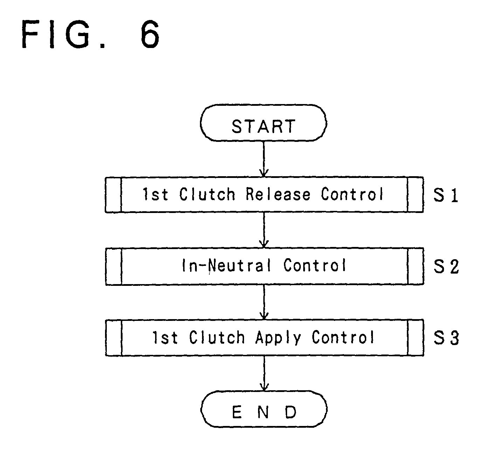

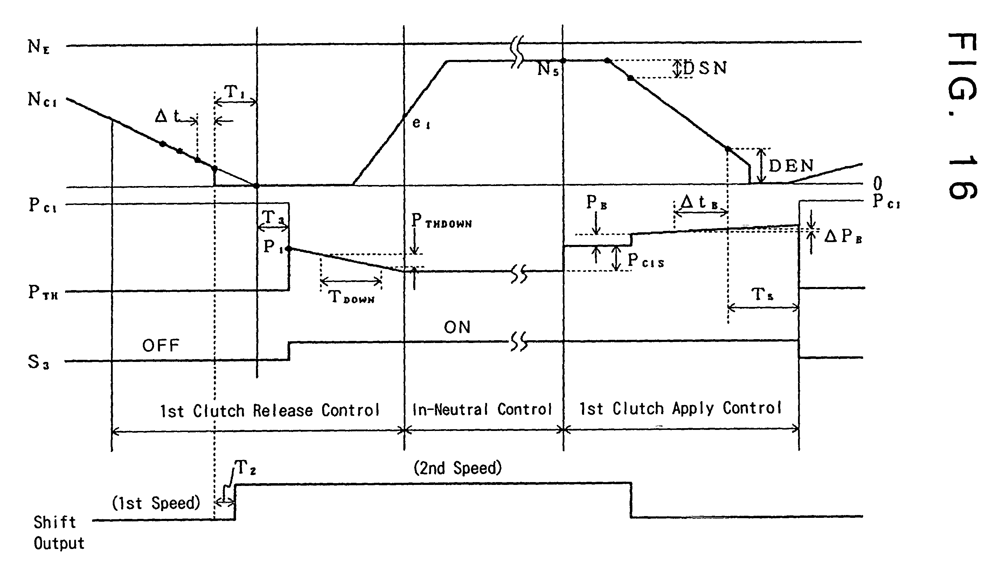

Fig. 6 is a main flow chart showing the operations of the automatic transmission control unit in the first embodiment of the present invention, and Fig. 16 is a time chart of the automatic transmission control unit in the first embodiment of the present invention. Incidentally, Fig. 16 is used together for the later description of the individual subroutines.
Step S1: The first clutch release control is executed. In this case, with the vehicle speed zero being assumed, the shift output of the 2nd speed is issued at a set timing to start the applications of the second brake B2 (Fig. 2) and the third brake B3 thereby to effect the hill hold control, and the throttle pressure P_{TH} is swept down at a set timing.

For these operations, the engine R.P.M. N_{E} corresponding to the input torque is determined, and the throttle pressure P_{TH} corresponding to the engine R.P.M. N_{E} is determined and set to a set oil pressure P₁ so that the C-1 oil pressure P_{C1} is set to the set oil pressure P₁ and is then gradually reduced.

Incidentally, the input torque can be detected not only from the engine R.P.M. N_{E} but also indirectly from the engine air intake, the fuel injection rate and so on. Moreover, the input torque of the speed change unit 16 can also be directly detected by the not-shown torque sensor. In this case, this torque sensor is attached to the output shaft 14 of the torque converter 12.
Step S2: The pressure reducing means 943 (Fig. 1) executes the in-neutral control to establish the neutral control state. In this case, the stabilizations of the engine R.P.M. N_{E} and the clutch input side N_{C1} are awaited. The C-1 oil pressure P_{C1} is boosted or reduced by set pressures on the basis of those engine R.P.M. N_{E} and clutch input side R.P.M. N_{C1} stabilized.
Step S3: The first clutch apply control is executed. In this case, the C-1 oil pressure P_{C1} is boosted by the set values which are set on the basis of the throttle opening θ, the engine R.P.M. N_{E} and so on, to end the movement of the piston of the hydraulic servo C-1 (Fig. 5) in the piston stroke. After the end of the piston movement in the piston stroke of the hydraulic servo C-1, the C-1 oil pressure P_{C1} is boosted by the set pressures to prevent the application shock.

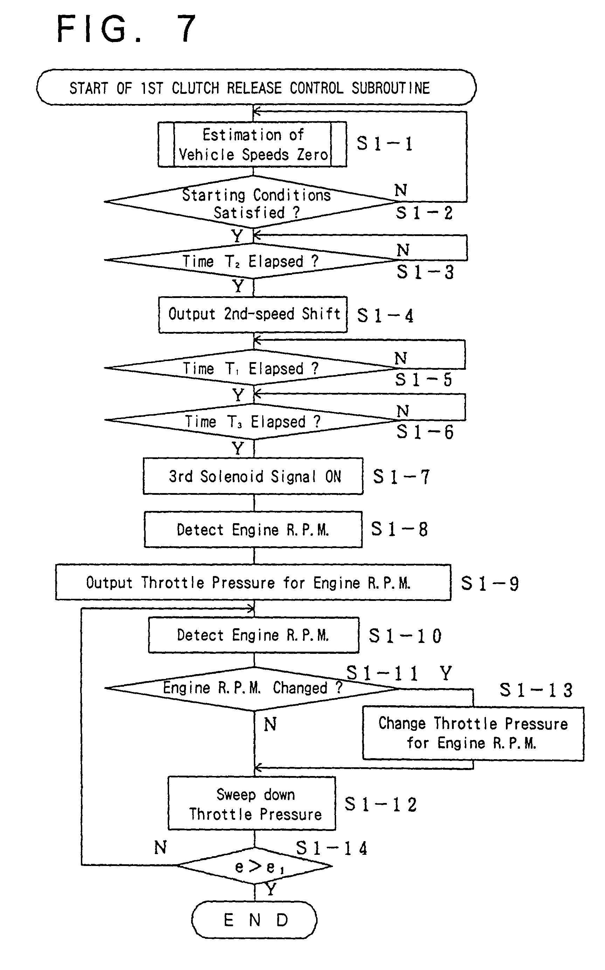

Here will be described the subroutine of the first clutch release control at the Step S1 of Fig. 6 with reference to Figs. 7 to 9.

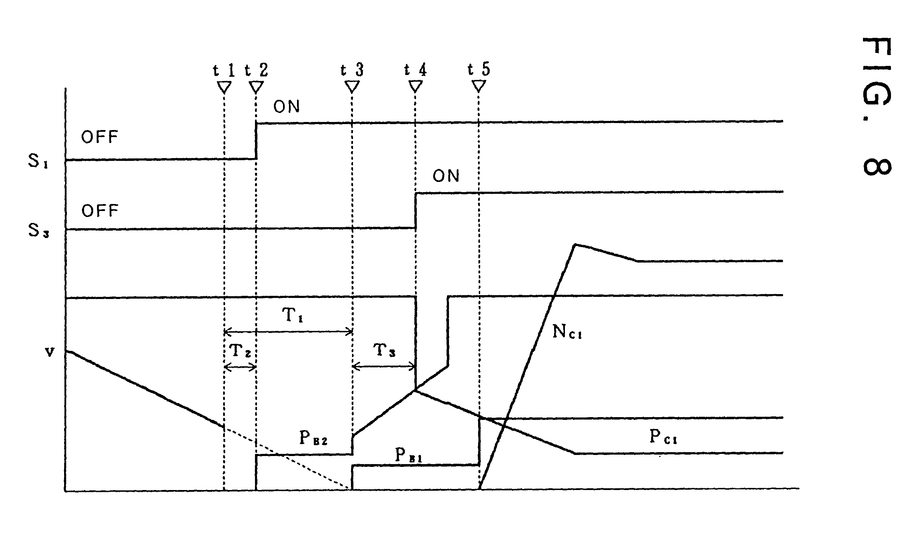

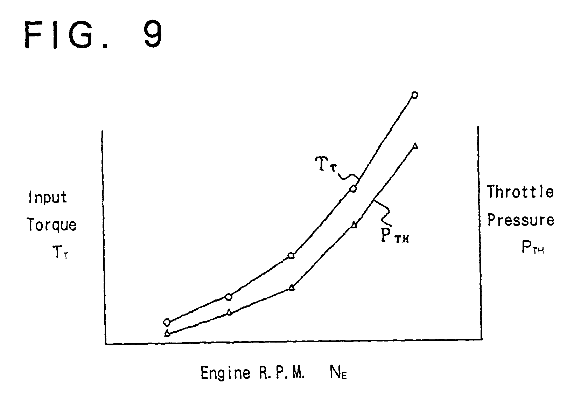

Fig. 7 is a flow chart of a first clutch release control subroutine in the first embodiment of the present invention; Fig. 8 is a time chart of a first clutch release control subroutine in the first embodiment of the present invention; and Fig. 9 is a diagram illustrating relations between an engine R.P.M., and an input torque and a throttle pressure in the first embodiment of the present invention. Incidentally, in Fig. 8: reference characters S₁ designate a first solenoid signal for opening/closing the first solenoid valve S1 (Fig. 4); characters S₃ a third solenoid signal for opening/closing the third solenoid valve S3 (Fig. 5); characters P_{C1} a C-1 oil pressure to be fed to the hydraulic servo C-1; letter v the vehicle speed; characters P_{B1} an oil pressure to be fed to the hydraulic servo B-1; characters P_{B2} an oil pressure to be fed to the hydraulic servo B-2; characters N_{C1} a clutch input side R.P.M.; and characters T₁ to T₃ time periods to be timed by the first to third timers, respectively. Moreover, Fig. 16 plots the input torque T_{T} (= t · C · N_{E}²) [Kg· m] and the throttle pressure P_{TH} [Kg· cm²] against the engine R.P.M. N_{E} [rpm].

At the 2nd speed in the D-range, as described before, the sun gear S₁ of the first planetary gear unit 31 can be retained through the one-way clutch F1 by applying the second brake B2 (Fig. 2). Moreover, the engine braking first brake B1 is arranged in parallel with the second brake B2, and the second brake B2 and the first brake B1 are applied at the 2nd speed in the D-range.

Moreover, the oil pressure is fed to the hydraulic servo B-2 of the second brake B2 so that the oil pressure is fed to the hydraulic servo B-1 of the first brake B1 in accordance with the rise of the oil pressure in the hydraulic servo B-2. As a result, when a predetermined time period elapses after the feed of the oil pressure to the hydraulic servo B-2 has been started, the feed of the oil pressure to the hydraulic servo B-1 is started so that the shifting shock can be prevented.

However, if the neutral control and the hill-hold control are adapted for the control system for an automatic transmission of this kind, the second brake B2 has to be applied before the application of the first brake B1 necessary for the hill-hold control. In order to start the application of the first brake B1, moreover, the movement of the piston in the piston stroke of the hydraulic servo B-1 has to be started after the end of the movement of the piston in the piston stroke of the hydraulic servo B-2. As a result, the start of the hill-hold control is accordingly delayed. This reduces the effects of the neutral control for reducing the fuel consumption and suppressing the vibration.

In the present invention, therefore, the effects of the neutral control for reducing the fuel consumption and suppressing the vibration are prevented in the control system for the automatic transmission, in which the feed of the oil pressure to the hydraulic servo B-1 is not started before the lapse of a predetermined time period after the feed of the oil pressure to the hydraulic servo B-2 has been started.
Step S1-1: The vehicle speed zero is estimated on the basis of the change in the clutch input side R.P.M. N_{C1}.
Step S1-2: The satisfaction of the conditions for starting the hill hold control and the neutral control is awaited. If the starting conditions are satisfied at a timing t1 in Fig. 8, the timing operations of the not-shown first and second timers are started, and the subroutine advances to Step S1-3.

In this case, the satisfaction of the starting conditions is decided if all the following conditions are satisfied: the clutch input side R.P.M. N_{C1} is substantially 0; the not-shown accelerator pedal is released so that the throttle opening θ is below a predetermined value; the oil temperature detected by the oil temperature sensor 46 is over a predetermined value; and the not-shown brake pedal is depressed to turn ON the brake switch 48. Incidentally, whether or not the clutch input side R.P.M. N_{C1} is substantially 0 is decided by the not-shown vehicle speed corresponding value decision means in dependence upon whether or not the detection limit of the R.P.M. sensor 47 is detected. In the present embodiment, it is decided that the detection limit is detected, if the actual vehicle speed v reaches a set value (2 [km/h]).
Step S1-3: The lapse of a time period T₂ by the second timer is awaited, and the subroutine advances to Step S1-4 if the time period T₂ elapses. Here, the time period T₂ is calculated by subtracting the time period (as will be called the "piston stroke time period") (e.g., about 0.4 secs in the present embodiment), which continues from the start to the end of the movement of the piston in the piston stroke of the hydraulic servo B-2, from the time period T₁ which is calculated by the speed zero estimation.
Step S1-4: The oil pressure feed means 944 starts the hill-hold control. At a timing t2, the 2nd speed shift output is outputted to turn ON the first solenoid signal S₁ for opening/closing the first solenoid valve S1 thereby to start the feed of the oil pressure to the hydraulic servo B-2 of the second brake B2.
Step S1-5: The lapse of the time period T₁ by first timer is awaited, and the timing operation of the not-shown third timer is started if the time period T₁ elapses at a timing t3. At the instant of the lapse of the time period T₁, the movement of the piston in the piston stroke of the hydraulic servo B-2 ends, and the oil pressure in the hydraulic servo B-2 rises to start the application of the second brake B2.

In accordance with the rise of the oil pressure in the hydraulic servo B-2, the sequence pressure in the hydraulic servo B-2 is fed to the B-1 sequence valve 56 to start the feed of the oil pressure to the hydraulic servo B-1. It is estimated that the vehicle speed drops to zero at the timing t3.
Step S1-6: The lapse of the time period T₃ by the timing operation of the third timer is awaited, and the subroutine advances to Step S1-7 if the time period T₃ elapses. In this case, the time period T₃ is set to the difference which is calculated by subtracting a delay time period τ₂ from a piston stroke time period τ₁, wherein: the time period τ₁ is the piston stroke time period of the hydraulic servo B-1; and the delay time period τ₂ is the time period after the third solenoid signal S₃ for opening/closing the third solenoid valve S3 and before the shift of the first clutch C1 from the applied state to the slipping state is started at a timing t5. In the present embodiment, the time period T₃ is set to 0.5 to 0.7 secs, but this setting may preferably be changed according to the temperature of the oil because both the piston stroke time period τ₁ and the delay time period τ₂ are varied depending upon the viscosity of the oil.

Thus, the application of the first brake B1 is ended at the timing t5 to effect the hill-hold control.

Thus, in the hill hold control, the 2nd speed gear stage is established in the speed change unit 16 so that the first clutch C1, the first brake B1, the second brake B2 and the fourth brake B4 are applied to lock the one-way clutches F1 and F3. In this state, if the vehicle is about to run backward uphill, the backward rotation is transmitted to the output shaft 23 of the auxiliary transmission 19 to rotate the ring gear R₁ forward. However, this rotation is blocked by the one-way clutch F2 so that the vehicle will not run backward.

Therefore, in case the hill-hold control is started simultaneously as the neutral control state is established in the uphill run, the shift of the first clutch C1 to the slipping state is not started till the application of the first brake B1 is started to effect the hill-hold control actually, so that the vehicle can be prevented from running backward.

As a result, the application of the first brake B1 is not started during the backward run of the vehicle thereby to hold the hill-hold control ineffective, so that the shock can be prevented.

With a delay in the establishment of the neutral control state, on the other hand, the effects of the neutral control for reducing the fuel consumption and suppressing the vibration are accordingly lowered. Subsequent to the start of the application of the first brake B1, however, the shift of the first clutch C1 to the slipping state can be started to shorten the useless time period thereby to prevent the fuel consumption reducing effect and the vibration suppressing effect from being deteriorated.
Step S1-7: At a timing t4, the third solenoid signal S₃ for opening/closing the third solenoid valve S3 is turned ON to switch the neutral relay valve 64 to the upper half position thereby to bring the C-1 oil pressure P_{C1} into a controllable state.
Step S1-8: As shown in Fig. 9, the engine R.P.M. N_{E} corresponding to the input torque T_{T} is detected, and a reference engine R.P.M. N_{Em} is set with the value of the engine R.P.M. N_{E}.
Step S1-9: The throttle pressure P_{TH} just before the start of the release of the first clutch C1 is determined to correspond to the engine R.P.M. N_{E} and is set as the set oil pressure P₁, and the C-1 oil pressure P_{C1} is reduced to the set oil pressure P₁.
Step S1-10: The engine R.P.M. N_{E} corresponding to the input torque T_{T} is detected again.
Step S1-11: It is decided whether or not the engine R.P.M. N_{E} has been changed with reference to the reference engine R.P.M. N_{Em}. The subroutine advances to Step S1-12, if not changed, but to Step S1-13 if changed.
Step S1-12: The throttle pressure P_{TH}, i.e., the C-1 oil pressure P_{C1} is lowered (or swept down) by set pressures P_{THDOWN} at every lapses of set time periods T_{DOWN}, as expressed by Equation (1):${\text{P}}_{\text{TH}} {\text{= P}}_{\text{TH}} {\text{- P}}_{\text{THDOWN}}$

In this meanwhile, the feed of the oil pressure to the hydraulic servo B-1 is continued, and the movement of the piston in the piston stroke of the hydraulic servo B-1 is ended at the timing t5 to start the application of the first brake B1. As a result, the hill-hold control is effective till the slipping engagement of the first clutch C1 is started at the timing t5.
Step S1-13: The value of the engine R.P.M. N_{E} at the instant when it is decided at Step S1-11 to have changed with reference to the reference engine R.P.M. N_{Em} is set in the reference engine R.P.M. N_{Em}, and the C-1 oil pressure P_{C1} is changed to the throttle pressure P_{TH} corresponding to the new reference engine R.P.M. N_{Em}.
Step S1-14: After the start of the shift to the slipping state of the first clutch C1, the return to Step S1-10 is repeated till the following speed ratio e exceeds a constant e₁:${\text{e = N}}_{\text{C1}} {\text{/N}}_{\text{E}} \text{.}$ This pressure reduction of Step S1-12 is stopped when the speed ratio e exceeds the constant e₁. This constant e₁ is set to 0.75, for example, while considering the delay of the change of the clutch input side R.P.M. N_{C1} for the manipulation of the oil pressure when the first clutch C1 is released. Incidentally, the speed ratio e may be replaced by the clutch input side R.P.M. N_{C1}.

If the applied state of the first clutch C1 is detected by deciding whether or not a differential rotation ΔN has changed, this differential rotation ΔN will not change no matter whether the first clutch C1 might be completely applied or released. As a result, it is difficult to differentiate the state, in which the first clutch C1 is completely applied, and the state in which the first clutch C1 is released.

Therefore, the state just before the application of the first clutch C1 is started can be restored without fail by awaiting that the speed ratio e overcomes the constant e₁.

Here will be described the subroutine of the vehicle speed zero estimation of Step S1-1 of Fig. 7.

For the neutral control, the vehicle speed sensor 51 is usually used for deciding the stop state of the vehicle but generally has a low detecting accuracy in case the vehicle speed v is extremely low. Especially, the electromagnetic pickup type vehicle speed sensor, as designed to detect the rotating speed of the rotor as the vehicle speed v thereby to output pulses, fails to output the pulses when the rotating speed is below a predetermined value, so that it cannot detect the vehicle speed v thereby allow a decision that the vehicle speed v is zero. Thus, there has been provided a control system for an automatic transmission, which decides the stop of the vehicle by considering the detection error of the vehicle speed sensor 51, even if the vehicle speed v is decided to be zero, so that the establishment of the neutral control state is delayed by a predetermined time period by the timer.

Incidentally, a large difference in the time period after the rotating speed has become lower than the predetermined value and before the vehicle actually stops is present between the cases in which the vehicle is stopped at a gentle deceleration and at a steep deceleration.

Therefore, in case the set time period of the timer is elongated to match the gentle deceleration, the time period before the neutral control state is established is accordingly elongated to deteriorate the fuel consumption reducing effect and the vibration suppressing effect of the neutral control.

Incidentally, in case the technique for delaying the establishment of the neutral control state by the set time period by the timer is applied to the present invention, the hill-hold control precedes the establishment of the neutral control state. This results in that the timing operation of the timer is started after the vehicle speed v has been decided to be zero, in that the feed of the oil pressure to the hydraulic servo B-2 of the second brake B2 is started after lapse of a set time period, and in that the neutral control state is established after the end of the movement of the piston in the piston stroke. These results further deteriorate the fuel consumption reducing effect and the vibration suppressing effect by the neutral control.

On the other hand, in case the set time period of the timer is shortened to match the steep deceleration, the hill-hold control is started despite of the fact that the vehicle does not stop yet, and the second brake B2 may be applied to effect a shift to another gear stage (for the 2nd speed) to cause the shifting shock.

In the present invention, therefore, the vehicle speed zero estimation is executed to prevent both the deterioration of the fuel consumption reducing effect and the vibration suppressing effect by the neutral control in accordance with the delay in the establishment of the neutral control state and the shifting shock in accordance with the premature start of the hill-hold control more than necessary.

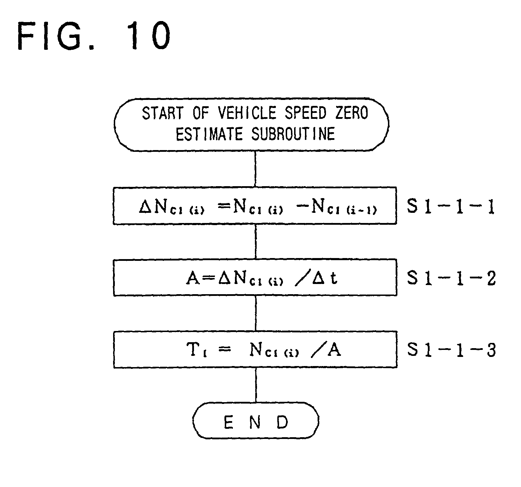

Fig. 10 is a flow chart of a vehicle speed zero estimate subroutine in the first embodiment of the present invention.
Step S1-1-1: The R.P.M. difference ΔN_{C1(1)} is calculated by subtracting a clutch input side R.P.M. N_{C1(i-1)} of a time period Δt before from a clutch input side R.P.M. N_{C1(i)} of the present time. In this case, the time period Δt is set by the clock in the automatic transmission control unit 41 (Fig. 2) so that the clutch input side R.P.M. N_{C1} is detected every time periods Δt.
Step S1-1-2: The not-shown deceleration calculation means calculates a deceleration A of the vehicle by dividing the R.P.M. difference ΔN_{C1(i)} by the time period Δt.
Step S1-1-3: The not-shown vehicle stop estimation means calculates the time period T₁ till the stop of the vehicle by dividing the present clutch input side R.P.M. N_{C1(i)} by the deceleration A.

Thus, since the timing for the vehicle to stop is estimated on the basis of the deceleration A, the first brake B1 is not applied during the run of the vehicle even the deceleration A of the vehicle fluctuates so that the shifting shock by the shift to the 2nd speed can be prevented. Moreover, since the start of the application of the first brake B1 can be effected as soon as possible, the shift to the slipping state of the first clutch C1 can be started accordingly early. This can prevent the deterioration of the fuel consumption reducing effect and the vibration suppressing effect by the neutral control.

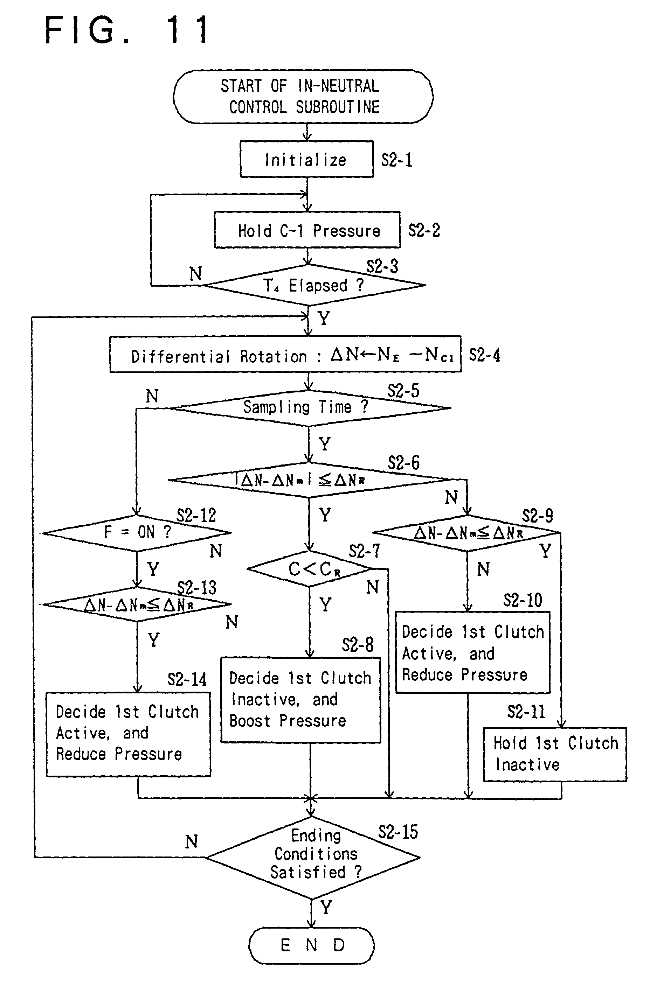

Here will be described the subroutine of the in-neutral control of Step S2 of Fig. 6 with reference to Figs. 11 to 13.

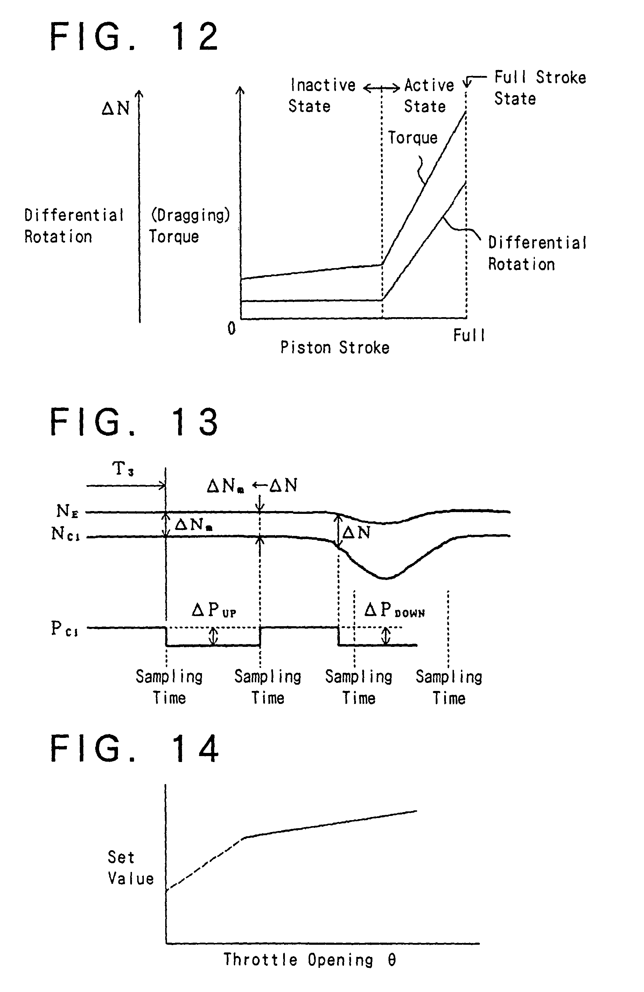

Fig. 11 is a flow chart of an in-neutral control subroutine in the first embodiment of the present invention; Fig. 12 is a diagram illustrating the state of a first clutch in a neutral control state in the first embodiment of the present invention; and Fig. 13 is a time chart illustrating an engine R.P.M., a clutch input side R.P.M. and a C-1 oil pressure at a neutral control time in the first embodiment of the present invention. Incidentally, Fig. 12 plots the differential rotation ΔN and the (dragging) torque against the piston stroke.
Step S2-1: An oil pressure control flag F, the counted value C of the not-shown counter, and the reference R.P.M. difference ΔNₘ are set to the following initial values: $\text{F ← Off;}$$\text{C ← 0;}$ and
ΔNₘ ← the value (N_{E} - N_{C1}) at that time.
Steps S2-2 and S2-3: The C-1 oil pressure P_{C1} is held at the final value of the first clutch release control. After it has been confirmed that the first clutch C1 (Fig. 2) was released to a predetermined state, a decision is promptly started as to whether the differential rotation ΔN has been changed. Then, this decision may be mistaken by the change in the differential rotation ΔN due to the pressure reduction in the first clutch release control. Therefore, the not-shown fourth timer is used to continue the holding of the C-1 oil pressure P_{C1} till the time period T₄ elapses. As a result, the decision upon whether or not the differential rotation ΔN has been changed can be postponed to prevent the C-1 oil pressure P_{C1} from being controlled in the unstable state just after the first clutch C1 has been released.
Step S2-4: The differential rotation ΔN between the engine R.P.M. N_{E} and the clutch input side R.P.M. N_{C1} is calculated.
Step S2-5: It is decided whether or not a preset sampling time is reached, that is, whether or not a time period 1.0 [sec] or 0.5 [sec] has elapsed. The subroutine advances to Step S2-6, if the sampling time is reached, but to Step S2-12 if NOT.
Step S2-6: It is decided whether or not the absolute value of the difference between the differential rotation ΔN and the reference differential rotation ΔNₘ is below a set value ΔN_{R}, that is, whether or not the change in the differential rotation ΔN is below the set value ΔN_{R}. The subroutine advances to Step S2-7, if below the set value ΔN_{R}, but to Step S2-9 if over the set value ΔN_{R}. This set value ΔN_{R} is set in advance to discriminate the active state and the inactive state of the first clutch C1, as shown in Fig. 12.

In case the differential rotation ΔN is to be calculated, it may be erroneously decided to have changed, if the erroneous detections of the not-shown input side R.P.M. sensor and output side R.P.M. sensor occur or if the calculation errors occur. Noting that the differential rotation ΔN is abruptly changed if the application of the first clutch C1 is started from a premature state, therefore, the erroneous decision of the change in the differential rotation ΔN can be prevented by deciding the change of the differential rotation ΔN if the change in the differential rotation ΔN exceeds the set value ΔN_{R}.

Moreover, if this set value ΔN_{R} is varied according to the oil temperature, the C-1 oil pressure P_{C1} can be properly controlled from the low to high temperature states of the oil.
Step S2-7: It is decided whether or not the counted value C of the counter is below a set value C_{R}. The subroutine advances to Step S2-8, if below the set value C_{R}, but to Step S2-15 if over the set value C_{R}.
Step S2-8: It is decided that the first clutch C1 is inactive, because of no change in the differential rotation ΔN. In this state, the piston of the hydraulic servo C-1 (Fig. 5) may have excessively returned, the C-1 oil pressure P_{C1} is boosted, as shown in Fig. 13, by a set pressure ΔP_{UP}, as follows: ${\text{P}}_{\text{C1}} {\text{← P}}_{\text{C1}} {\text{+ ΔP}}_{\text{UP}} \text{.}$

Moreover, the reference differential rotation Δ Nₘ is set with the differential rotation ΔN, and the oil pressure control flag F is turned ON: ${\text{ΔN}}_{\text{m}} \text{← ΔN;}$ and $\text{F ← ON.}$Step S2-9: It is decided whether or not the change in the differential rotation ΔN has a tendency to decrease, that is, whether or not the difference of the differential rotation ΔN from the reference differential rotation ΔNₘ is below the set value ΔN_{R}. The subroutine advances to Step S2-11, if below the set value ΔN_{R}, but to Step S2-10 if over the set value Δ N_{R}.
Step S2-10: It can be decided that the first clutch C1 is transferring from the inactive state to the active state. Hence, the C-1 oil pressure P_{C1} is reduced by a set pressure ΔP_{DOWN}, as follows: ${\text{P}}_{\text{C1}} {\text{← P}}_{\text{C1}} {\text{- ΔP}}_{\text{DOWN}} \text{.}$

Moreover, the reference differential rotation Δ Nₘ is set with the differential rotation ΔN, and the oil pressure control flag F is turned OFF whereas the value "1" is subtracted from the counted value C of the counter. The C-1 oil pressure P_{C1} at this time is set as a reference C-1 oil pressure P_{C1m}, as follows: ${\text{ΔN}}_{\text{m}} \text{← ΔN;}$$\text{F ← OFF;}$$\text{C ← C - 1 (C = 0 for C < 0);}$ and ${\text{P}}_{\text{C1m}} {\text{← P}}_{\text{C1}} \text{.}$Step S2-11: Since the first clutch C1 can be decided to be in the course from the active state to the inactive state, the C-1 oil pressure P_{C1} is held at the value of that time, and the oil pressure control flag F is turned OFF: $\text{F ← OFF.}$

Specifically, even if the differential rotation ΔN is changed, this change is in the direction to decrease in case the first clutch C1 is transferring from the active state to the inactive state. At this time, if the C-1 oil pressure P_{C1} is further reduced, the piston may abruptly move back to establish an excessive loss stroke. Therefore, the reduction of the C-1 oil pressure P_{C1} is once inhibited and held at the value of that time in case the first clutch C1 is transferring from the active to inactive states.
Step S2-12: It is decided whether or not the oil pressure control flag F is ON, that is, whether or not the C-1 oil pressure P_{C1} is boosted at a previous sampling instant. The subroutine advances to Step S2-13, if the oil pressure control flag F is ON, but to Step S2-15 if OFF.
Step S2-13: It is decided whether or not the difference of the differential rotation ΔN from the reference differential rotation ΔNₘ is below the set value ΔN_{R}, because the C-1 oil pressure P_{C1} is boosted at the previous sampling instant. The subroutine advances to Step S2-14, if below the set value ΔN_{R}, but to Step S2-15 if over the set value ΔN_{R}.
Step S2-14: The differential rotation ΔN is changed by boosting the C-1 oil pressure P_{C1} at the previous sampling instant. As a result, it is decided that the first clutch C1 is in the applied state, and reduces the C-1 oil pressure P_{C1} by the set pressure ΔP_{DOWN}: ${\text{P}}_{\text{C1}} {\text{← P}}_{\text{C1}} {\text{- ΔP}}_{\text{DOWN}} \text{.}$

Moreover, the reference differential rotation Δ Nₘ is set with the differential rotation ΔN, and the oil pressure control flag F is turned OFF whereas the value "1" is added to the counted value of the counter. As at Step S2-10, moreover, the C-1 oil pressure P_{C1} at this instant is set as the reference C-1 oil pressure P_{C1m}, as follows: ${\text{ΔN}}_{\text{m}} \text{←ΔN;}$$\text{F ← OFF;}$$\text{C ← C + 1;}$ and ${\text{P}}_{\text{C1m}} {\text{← P}}_{\text{C1}} \text{.}$

As described before, it is decided whether or not the differential rotation ΔN has been changed at each sampling instant. In case the C-1 oil pressure P_{C1} is boosted according to the decision, the application of the first clutch C1 may be instantly started, but the first clutch C1 may be released. Then, the idle vibration may be generated if the torque transmission is started. Therefore, in case the differential rotation ΔN is changed to increase while the application of the first clutch C1 is being started, the C-1 oil pressure P_{C1} is reduced without awaiting the subsequent sampling instant. Thus, the first clutch C1 can be prevented from being released to prevent the idle vibration.

Moreover, the C-1 oil pressure P_{C1} is changed on in case the change in the differential rotation ΔN is higher than the set value ΔN_{R} at each sampling instant, as described before. In this case, the differential rotation changes little by little, the C-1 oil pressure P_{C1} may not be changed despite the first clutch C1 has transferred to the applied state. Thus, the reference differential rotation ΔNₘ is updated only when the C-1 oil pressure P_{C1} is changed. As a result, the change of the C-1 oil pressure P_{C1} can be ensured, in case the differential rotation ΔN is changed little by little so that the first clutch C1 is transferring to the applied state.
Step S2-15: It is decided whether or not the conditions for ending the in-neutral control of the first clutch C1 are satisfied. If the ending conditions are satisfied, the in-neutral control is ended. Otherwise, the subroutine returns to Step S2-4, and the foregoing steps are repeated.

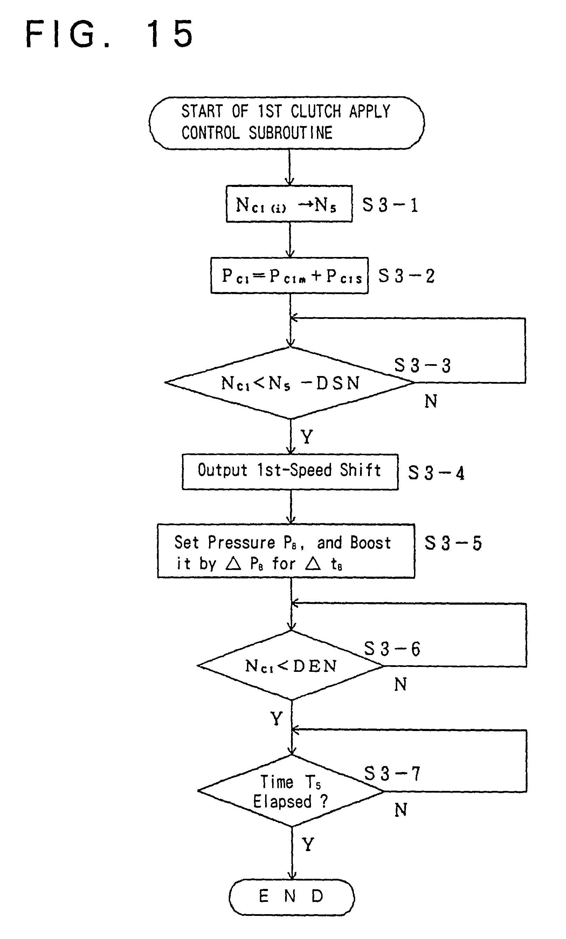

Here will be described the subroutine of the first clutch apply control at Step S3 of Fig. 6 with reference to Figs. 14 and 15.

Fig. 14 is a diagram illustrating a relation between a throttle opening and a set value in the first embodiment of the present invention; and Fig. 15 is a flow chart of a first clutch apply control subroutine in the first embodiment of the present invention. Incidentally, Fig. 14 plots the set value against the throttle opening θ.
Step S3-1: The clutch input side R.P.M. N_{C1(i)} at the instant when the in-neutral control ending conditions are satisfied is stored as a value N₅ in the not-shown memory in the automatic transmission control unit 41 (Fig. 2).
Step S3-2: A constant P_{C1s} is added to the reference C-1 oil pressure P_{C1m} set at Steps S2-10 and S2-11, and the sum is set as the C-1 oil pressure P_{C1}. Incidentally, the constant P_{C1s} is set to such a value as to move the not-shown piston of the hydraulic servo C-1 (Fig. 5) without fail and to reduce the engaging shock to be generated by the application.
Step S3-3: It is awaited that the clutch input side R.P.M. N_{C1} becomes smaller than the difference of the value N₅ from a constant DSN. If the clutch input side R.P.M. N_{C1} becomes smaller than the difference of the value N₅ from the constant DSN, the start of application of the first clutch C1 is decided, and the subroutine advances to Step S3-4.
Step S3-4: The 1st-speed shift output is issued.
Step S3-5: The throttle pressure P_{TH} coming from the linear solenoid valve 66 (Fig. 4) is changed to boost the C-1 oil pressure P_{C1} to a pressure P_{B} and then boosts the C-1 oil pressure P_{C1} by set pressures ΔP_{B} at each lapse of a time period Δt_{B} thereby to continue the application of the first clutch C1.
Step S3-6: It is awaited that the clutch input side R.P.M. N_{C1} becomes smaller than a constant DEN.
Step S3-7: The not-shown fifth timer measures the time period, and the lapse of a time period T₅ is awaited.

In this case, the set values of the constant P_{C1s}, the pressure P_{B}, the set pressure ΔP_{B} and so on are set on the basis of variables corresponding to the input torque T_{T} (Fig. 9) such as the throttle opening θ.

Incidentally, in the foregoing embodiment, the feed of the oil pressure to the hydraulic servo B-2 is started by generating the 2nd speed shifting output at Step S1-4 of Fig. 7, but the oil pressure is not fed to the hydraulic servo B-1 till the oil pressure in the hydraulic servo B-2 rises. This accordingly delays the start and end of the application of the hydraulic servo B-1.

Thus, here will be described a second embodiment in which the feed of the oil pressure to the hydraulic servo B-1 is started simultaneously with the start of the feed of the oil pressure to the hydraulic servo B-2.

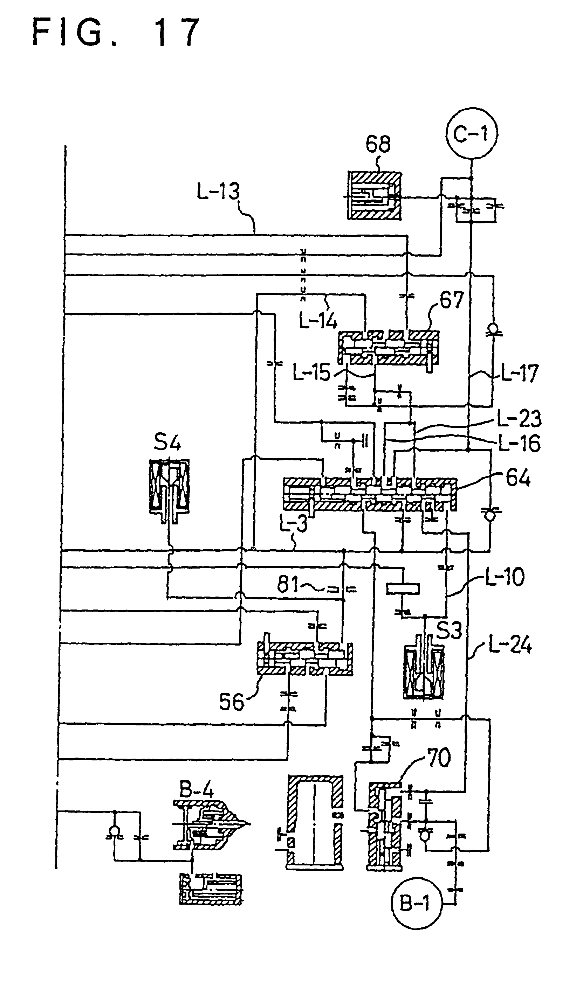

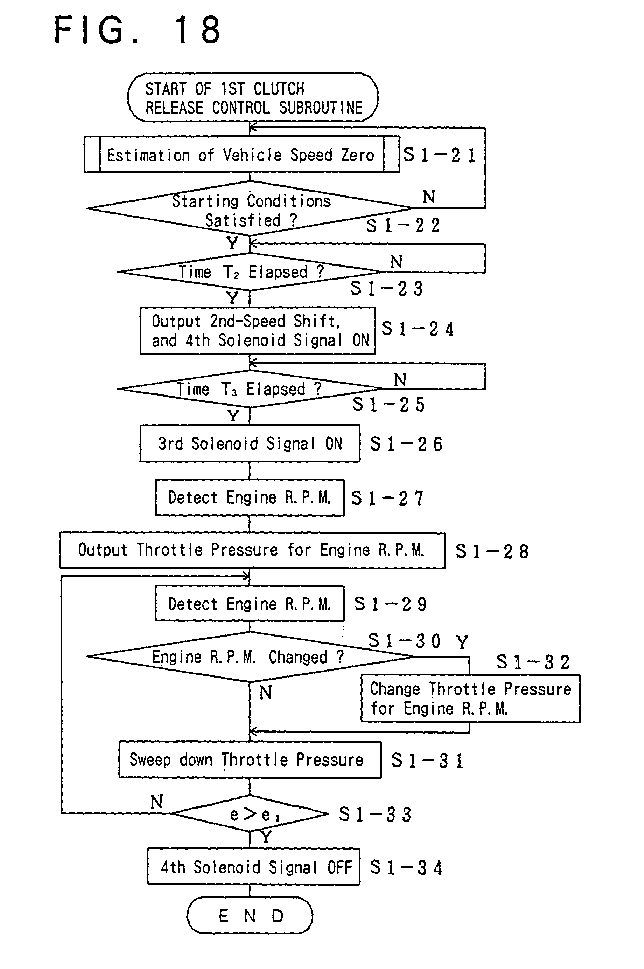

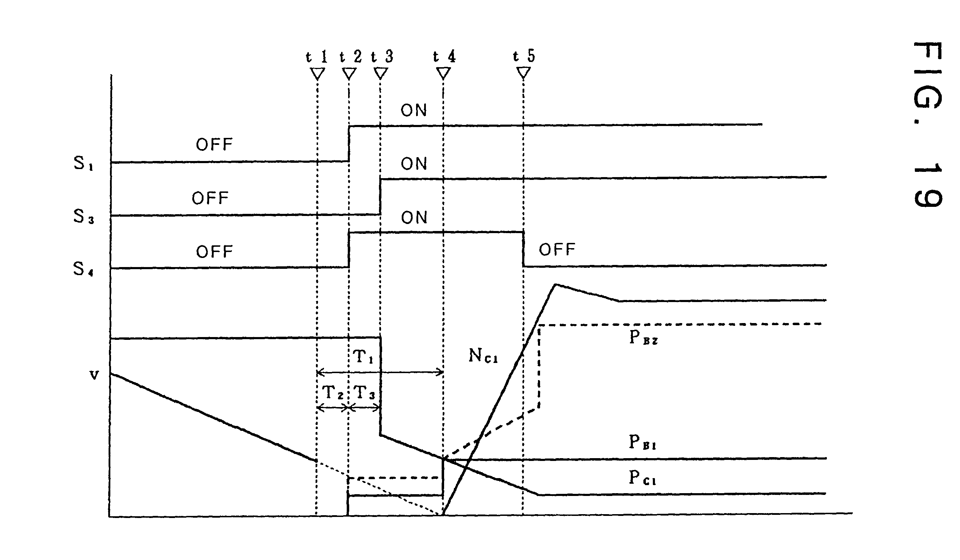

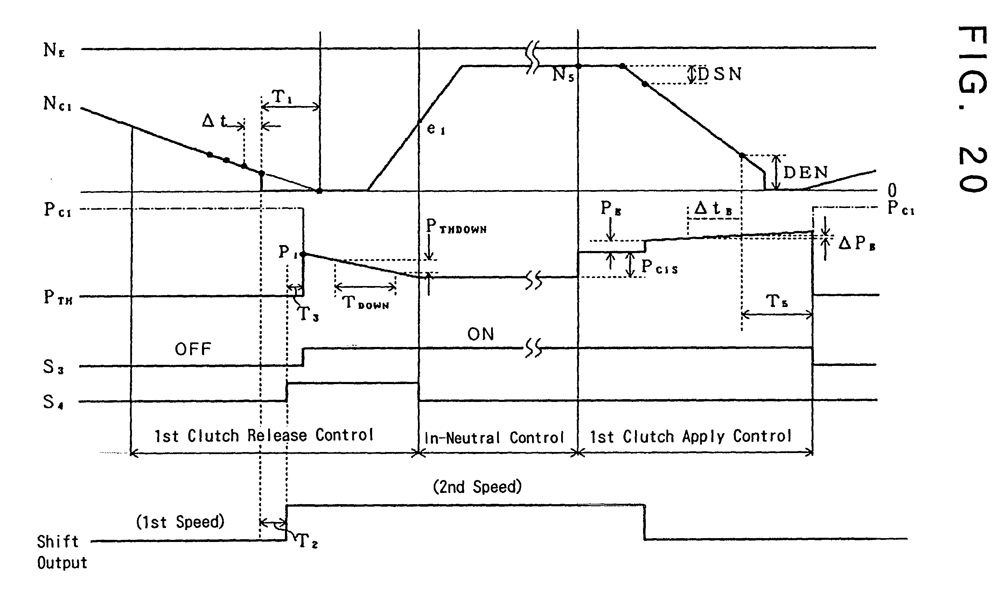

Fig. 17 is a diagram showing a hydraulic circuit of an automatic transmission according to a second embodiment of the present invention; Fig. 18 is a flow chart of a first clutch release control subroutine in the second embodiment of the present invention; Fig. 19 is a time chart of the first clutch release control subroutine in the second embodiment of the present invention; and Fig. 20 is a time chart of an automatic transmission control unit in the second embodiment of the present invention. Incidentally, Fig. 17 shows such a portion of the hydraulic circuit, as corresponds to that of Fig. 5. The remaining portion of the hydraulic circuits has the same structure as that of Fig. 4, and its description will be omitted by referring to Fig. 4. Moreover, the portions of Fig. 17 having the same structure as that of Fig. 5 will not be described by designating them at reference characters. Likewise, the portions of Fig. 20 having the same structure as that of Fig. 16 will not be described by designating them at reference characters.

In this case, as shown in Fig. 17, the B-1 sequence valve 56 is arranged at its left end with a spring and at its right end with a control oil chamber. The spring exerts its load upon the spool, and the control oil chamber applies a control oil pressure to the spool. For these operations, the control oil chamber is connected to the line L-3 through an orifice 81 and to a fourth solenoid valve S4 at the side closer than the orifice 81 to the B-1 sequence valve 56.

Moreover, this B-1 sequence valve 56 receives at the 1st speed the D-range pressure at its control oil chamber via the line L-3 so that it takes the lower half position. When the fourth solenoid valve S4 is opened at the 2nd speed, the spool is released from the control oil pressure and is pushed to the right by the spring load so that the B-1 solenoid valve 56 takes the upper half position. As a result, the oil pressure from the 1-2 shift valve 57 is fed through the B-1 solenoid valve 56 to the 3-4 shift valve 62 and further through the 1-2 shift valve 57 and the neutral relay valve 64 to the hydraulic servo B-1. Thus, the oil pressure is fed to the hydraulic servo B-1 as the fourth solenoid valve S4 is opened.

As a result, at the 2nd speed, the oil pressure is fed simultaneously to the hydraulic servo B-2 and the hydraulic servo B-1 so that the oil pressure rises.

Here will be described the first clutch release control of the present embodiment with reference to Figs. 18 and 19. Incidentally, in Fig. 19: reference characters S₁ designate a first solenoid signal for opening/closing the first solenoid valve S1; characters S₃ a third solenoid signal for opening/closing the third solenoid valve S3; characters S₄ a fourth solenoid signal for opening/closing the fourth solenoid valve S4; characters P_{C1} a C-1 oil pressure to be fed to the hydraulic servo C-1; letter v a vehicle speed; characters P_{B1} an oil pressure to be fed to the hydraulic servo B-1; characters P_{B2} an oil pressure to be fed to the hydraulic servo B-2; characters N_{C1} a clutch input side R.P.M.; and characters T₁ to T₃ time periods timed by the first to third timers, respectively.
Step S1-21: The vehicle speed zero estimation is executed on the basis of the change in the clutch input side R.P.M. N_{C1}.
Step S1-22: It is awaited that the conditions for starting the hill-hold control and the neutral control are satisfied. If the starting conditions are satisfied at the timing t1 shown in Fig. 19, the timing operations of the not-shown first and second timers are started, and the subroutine advances to Step S1-23.

In this case, the satisfaction of the starting conditions is decided if all the following conditions are satisfied: the clutch input side R.P.M. N_{C1} is substantially 0; the not-shown accelerator pedal is released so that the throttle opening θ is below a predetermined value; the oil temperature detected by the oil temperature sensor 46 (Fig. 2) is over a predetermined value; and the not-shown brake pedal is depressed to turn ON the brake switch 48. Incidentally, whether or not the clutch input side R.P.M. N_{C1} is substantially 0 is decided depending upon whether or not the detection limit of the R.P.M. sensor 47 is detected. In the present embodiment, it is decided that the detection limit is detected, if the actual vehicle speed reaches a set value (2 [km/h]).
Step S1-23: The lapse of a time period T₂ by the second timer is awaited, and the subroutine advances to Step S1-24 if the time period T₂ elapses. Here, the time period T₂ is calculated by subtracting the piston stroke time period (e.g., about 0.4 secs in the present embodiment) of the hydraulic servo B-2, from the time period T₁ which is calculated by the speed zero estimation.
Step S1-24: The hill-hold control is started. Specifically, the 2nd speed shift output is issued at the timing t2, and the first solenoid signal S₁ for opening /closing the first solenoid valve S1 is turned ON to start the feed of the oil pressure to the hydraulic servo B-2 of the second brake B2. At this time, moreover, the fourth solenoid signal S₄ for opening/closing the fourth solenoid valve S4 is turned ON to start the feed of the oil pressure to the hydraulic servo B-1 of the first brake B1 and the timing operation of the not-shown third timer.
Step S1-25: The lapse of the time period T₃ by the timing operation of the third timer is awaited, and the subroutine advances to Step S1-26 if the time period T₃ elapses. In this case, the time period T₃ is set to the difference which is calculated by subtracting a delay time period τ₂ from a piston stroke time period τ₁, wherein: the time period τ₁ is the piston stroke time period of the hydraulic servo B-1; and the delay time period τ₂ is the time period after the third solenoid signal S₃ for opening/closing the third solenoid valve S3 and before the shift of the first clutch C1 from the applied state to the slipping state is started at a timing t4. The setting of the time period T₃ may preferably be changed according to the temperature of the oil because both the piston stroke time period τ₁ and the delay time period τ₂ are varied depending upon the viscosity of the oil. Incidentally, the fourth solenoid signal S₄ is turned OFF at the timing t5. In this case, the fourth solenoid signal S₄ could be turned OFF at and after the timing t4.
Step S1-26: At a timing t3, the third solenoid signal S₃ for opening/closing the third solenoid valve S3 is turned ON to switch the neutral relay valve 64 to the upper half position thereby to bring the C-1 oil pressure P_{C1} into a controllable state.
Step S1-27: As shown in Fig. 9, the engine R.P.M. N_{E} corresponding to the input torque T_{T} is detected, and a reference engine R.P.M. N_{Em} is set with the value of the engine R.P.M. N_{E}.
Step S1-28: The throttle pressure P_{TH} just before the start of the release of the first clutch C1 is determined to correspond to the engine R.P.M. N_{E} and is set as the set oil pressure P₁, and the C-1 oil pressure P_{C1} is reduced to the set oil pressure P₁.
Step S1-29: The engine R.P.M. N_{E} corresponding to the input torque T_{T} is detected again.
Step S1-30: It is decided whether or not the engine R.P.M. N_{E} has been changed with reference to the reference engine R.P.M. N_{Em}. The subroutine advances to Step S1-31, if not changed, but to Step S1-32 if changed.
Step S1-31: The throttle pressure P_{TH}, i.e., the C-1 oil pressure P_{C1} is lowered (or swept down) by set pressures P_{THDOWN} at every lapses of set time periods T_{DOWN}, as expressed by the foregoing Equation (1).

In this meanwhile, the feeds of the oil pressure to the hydraulic servo B-2 and the hydraulic servo B-1 are continued, and the movements of the pistons in the piston strokes of the hydraulic servo B-2 and the hydraulic servo B-1 are ended at the timing t4 to start the applications of the second brake B2 and the first brake B1. As a result, the hill-hold control is effective till the slipping engagement of the first clutch C1 is started at the timing t4.
Step S1-32: The value of the engine R.P.M. N_{E} at the instant when it is decided at Step S1-30 to have changed with reference to the reference engine R.P.M. N_{Em} is set in the reference engine R.P.M. N_{Em}, and the C-1 oil pressure P_{C1} is changed to the throttle pressure P_{TH} corresponding to the new reference engine R.P.M. N_{Em}.
Step S1-33: After the start of the shift to the slipping state of the first clutch C1, the return to Step S1-29 is repeated till the following speed ratio e exceeds a constant e₁:${\text{e = N}}_{\text{C1}} {\text{/N}}_{\text{E}} \text{.}$ This pressure reduction of Step S1-31 is stopped, and the subroutine advances to Step S1-34, when the speed ratio e exceeds the constant e₁. This constant e₁ is set to 0.75, for example, while considering the delay of the change of the clutch input side R.P.M. N_{C1} for the manipulation of the oil pressure when the first clutch C1 is released. Incidentally, the speed ratio e may be replaced by the clutch input side R.P.M. N_{C1}.
Step S1-34: The fourth solenoid signal S₄ is turned OFF at the timing t5.

## Claims

1. A control system for an automatic transmission, comprising: a fluid transmission unit for transmitting the rotation of an engine (10) to a speed change unit (16); a clutch (C1) adapted to be applied when a forward running range is selected; a one-way clutch (F2) adapted to be locked, when said clutch (C1) is applied, for establishing a forward first speed; a brake (B1) for locking said one-way clutch, when locked, to block the backward rotation of the output shaft (23) of said speed change unit; a first hydraulic servo (91) for applying said clutch (C1) when fed with an oil pressure; a second hydraulic servo (92) for applying said brake (B1) when fed with an oil pressure; a vehicle speed corresponding value sensor for detecting a vehicle speed corresponding value changing in a manner to correspond the vehicle speed; and a control unit (94) for controlling the oil pressures to be fed to said first hydraulic servo (91) and said second hydraulic servo (92),
wherein said control unit (94) includes: vehicle speed corresponding value decision means for deciding whether or not said vehicle speed corresponding value has reached a set value; deceleration calculation means for calculating the deceleration of the vehicle on the basis of the vehicle speed corresponding value before having reached said set value; vehicle stop estimation means for estimating the timing for the vehicle to stop on the basis of said deceleration, if it is decided that said vehicle speed corresponding value has reached said set value; oil pressure feed means (944) for starting the feed of the oil pressure to said second hydraulic servo (92) at a set timing, if the forward running range is selected, if the engine (10) is in an idling state and if the foot brake is in an active state, and for ending the movement of the piston in the piston stroke of said second hydraulic servo (92) at and after the timing estimated by said vehicle stop estimation means; and pressure reducing means (943) for starting the pressure reduction of said first hydraulic servo (91) at a set timing and starting the shift of the applied state to the slipping state of said clutch (C1) at and after the timing, in which the movement of the piston in the piston stroke of said second hydraulic servo (92) ends so that the application of said brake (B1) is started.

2. A control system for an automatic transmission according to claim 1,
wherein said pressure reducing means (943) starts the pressure reduction of said first hydraulic servo (91) after the lapse of a predetermined time period after the feed of the oil pressure to said second hydraulic servo (92) is started by said oil pressure feed means (944).

3. A control system for an automatic transmission, comprising: a fluid transmission unit for transmitting the rotation of an engine (10) to a speed change unit (16); a clutch (C1) adapted to be applied when a forward running range is selected; a first one-way clutch (F2) adapted to be locked, when said clutch (C1) is applied, for establishing a forward first speed; a first brake (B1) for locking said one-way clutch (F2), when locked, to block the backward rotation of the output shaft (23) of said speed change unit (16), and for retaining a speed change member when applied at gear stages at forward 2nd or higher speeds; a second brake (B2) arranged in parallel with said first brake (B1) for retaining said speed change member through a second one-way clutch (F1); a first hydraulic servo (91) for applying said clutch (C1) when fed with an oil pressure; a second hydraulic servo (92) for applying said first brake (B1) when fed with an oil pressure; a third hydraulic servo for applying said second brake (B2) when fed with an oil pressure; a vehicle speed corresponding value sensor for detecting a vehicle speed corresponding value changing in a manner to correspond the vehicle speed; and a control unit (94) for controlling the oil pressures to be fed to said first hydraulic servo (91) and said second hydraulic servo (92),
wherein said control unit (94) includes: vehicle speed corresponding value decision means for deciding whether or not said vehicle speed corresponding value has reached a set value; deceleration calculation means for calculating the deceleration of the vehicle on the basis of the vehicle speed corresponding value before having reached said set value; vehicle stop estimation means for estimating the timing for the vehicle to stop on the basis of said deceleration, if it is decided that said vehicle speed corresponding value has reached said set value; oil pressure feed means (944) for starting the feed of the oil pressure to said third hydraulic servo at a set timing, if the forward running range is selected, if the engine (10) is in an idling state and if the foot brake is in an active state, and for ending the movement of the piston in the piston stroke of said third hydraulic servo at and after the timing estimated by said vehicle stop estimation means; a sequence valve adapted to be switched in response to the rise of the oil pressure of said third hydraulic servo for starting the feed of the oil pressure to said second hydraulic servo (92) at the timing in which the movement of the piston in the piston stroke of said third hydraulic servo ends; and pressure reducing means (943) for starting the pressure reduction of said first hydraulic servo (91) at a set timing and starting the shift of the applied state to the slipping state of said clutch (C1) at and after the timing, in which the movement of the piston in the piston stroke of said second hydraulic servo (92) ends so that the application of said first brake (B1) is started.

4. A control system for an automatic transmission, comprising: a fluid transmission unit for transmitting the rotation of an engine (10) to a speed change unit (16); a clutch (C1) adapted to be applied when a forward running range is selected; a first one-way clutch (F2) adapted to be locked, when said clutch (C1) is applied, for establishing a forward first speed; a first brake (B1) for locking said one-way clutch (F2), when locked, to block the backward rotation of the output shaft (23) of said speed backward rotation of the output shaft of said speed change unit (16), and for retaining a speed change member when applied at gear stages at forward 2nd or higher speeds; a second (B2) arranged in parallel with said first brake (B1) for retaining said speed change member through a second one-way clutch (F1); a first hydraulic servo (91) for applying said clutch (C1) when fed with an oil pressure; a second hydraulic servo (92) for applying said first brake (B1) when fed with an oil pressure; a third hydraulic servo for applying said second brake (B2) when fed with an oil pressure; a vehicle speed corresponding value sensor for detecting a vehicle speed corresponding value changing in a manner to correspond the vehicle speed; and a control unit (94) for controlling the oil pressures to be fed to said first hydraulic servo (91) and said second hydraulic servo (92),
wherein said control unit (94) includes: vehicle speed corresponding value decision means for deciding whether or not said vehicle speed corresponding value has reached a set value; deceleration calculation means for calculating the deceleration of the vehicle on the basis of the vehicle speed corresponding value before having reached said set value; vehicle stop estimation means for estimating the timing for the vehicle to stop on the basis of said deceleration, if it is decided that said vehicle speed corresponding value has reached said set value; oil pressure feed means (944) for starting the feeds of the oil pressures to said second hydraulic servo (92) and said third hydraulic servo at a set timing, if the forward running range is selected, if the engine (10) is in an idling state and if the foot brake is in an active state, and for ending the movements of the pistons in the piston strokes of said second hydraulic servo (92) and said third hydraulic servo at and after the timing estimated by said vehicle stop estimation means; and pressure reducing means (943) for starting the pressure reduction of said first hydraulic servo (91) at a set timing and starting the shift of the applied state to the slipping state of said clutch (C1) at and after the timing, in which the movements of the pistons in the piston strokes of said second hydraulic servo (92) and said third hydraulic servo end so that the applications of said first brake (B1) and said second brake (B2) are started.

5. A control system for an automatic transmission according to claim 3 or 4,
wherein said pressure reducing means (943) starts the pressure reduction of said first hydraulic servo (91) after the lapse of a predetermined time period after the feed of the oil pressure to said third hydraulic servo is started by said oil pressure feed means (944).

6. A control system for an automatic transmission according to any one of claims 1 to 5,
wherein said predetermined time period is changed according to the oil temperature.

7. A control system for an automatic transmission according to any one of claims 1 to 6,
wherein said pressure reducing means (943) releases said clutch (C1) after the shift of said clutch from the applied state to the slipping state is started.

## Patentansprüche

1. Steuerungssystem für ein Automatikgetriebe mit einer Hydraulikgetriebeeinheit zum Übertragen der Drehung eines Motors (10) auf eine Gangwechseleinheit (16), einer Kupplung (C1), die dafür ausgelegt ist, eingerückt zu werden, wenn ein Vorwärtsfahrbereich gewählt wird, einer Einwegkupplung (F2), die dafür ausgelegt ist, verriegelt zu werden, wenn die Kupplung (C1) eingerückt wird, um einen ersten Vorwärtsgang einzurichten, einer Bremse (B1) zum Verriegeln der Einwegkupplung, die, wenn sie verriegelt ist, die Rückwärtsdrehung der Abtriebswelle (23) der Gangwechseleinheit blockiert, einer ersten hydraulischen Servoeinrichtung (91) zum Einrücken der Kupplung (C1), wenn ihr ein Öldruck zugeführt wird, einer zweiten hydraulischen Servoeinrichtung (92) zum Anwenden der Bremse (B1), wenn ihr ein Öldruck zugeführt wird, einem Fahrzeuggeschwindigkeits-Entsprechungswert-Sensor zum Erfassen eines der Fahrzeuggeschwindigkeit entsprechenden Werts, der sich entsprechend der Fahrzeuggeschwindigkeit ändert, und einer Steuereinheit (94) zum Steuern der Öldrücke, die der ersten hydraulischen Servoeinrichtung (91) und der zweiten hydraulischen Servoeinrichtung (92) zuzuführen sind,
wobei die Steuereinheit (94) aufweist: eine Fahrzeuggeschwindigkeits-Entsprechungswert-Entscheidungseinrichtung zum Entscheiden, ob der der Fahrzeuggeschwindigkeit entsprechende Wert einen festgelegten Wert erreicht hat, eine Verzögerungsberechnungseinrichtung zum Berechnen der Verzögerung des Fahrzeugs auf der Grundlage des der Fahrzeuggeschwindigkeit entsprechenden Werts, bevor er den festgelegten Wert erreicht hat, eine Einrichtung zum Schätzen des Anhaltens des Fahrzeugs, um den Zeitpunkt des Anhaltens des Fahrzeugs auf der Grundlage der Verzögerung zu schätzen, wenn entschieden wird, daß der der Fahrzeuggeschwindigkeit entsprechende Wert den festgelegten Wert erreicht hat, eine Öldruck-Zufuhreinrichtung (944) zum Einleiten der Zufuhr des Öldrucks zur zweiten hydraulischen Servoeinrichtung (92) zu einem festgelegten Zeitpunkt, wenn der Vorwärtsfahrbereich gewählt ist, wenn sich der Motor (10) in einem Leerlaufzustand befindet und wenn sich die Fußbremse in einem aktiven Zustand befindet, und zum Beenden der Bewegung des Kolbens beim Kolbenhub der zweiten hydraulischen Servoeinrichtung (92) zum von der Einrichtung zum Schätzen des Anhaltens des Fahrzeugs geschätzten Zeitpunkt und nach diesem, und eine Druckverringerungseinrichtung (943) zum Einleiten der Druckverringerung der ersten hydraulischen Servoeinrichtung (91) zu einem festgelegten Zeitpunkt und zum Einleiten des Schaltens aus dem eingerückten Zustand in den Schlupfzustand der Kupplung (C1) zu und nach dem Zeitpunkt, zu dem die Bewegung des Kolbens beim Kolbenhub der zweiten hydraulischen Servoeinrichtung (92) endet, so daß das Anwenden der Bremse (B1) eingeleitet wird.

2. Steuerungssystem für ein Automatikgetriebe nach Anspruch 1,
wobei die Druckverringerungseinrichtung (943) die Druckverringerung der ersten hydraulischen Servoeinrichtung (91) nach Verstreichen eines vorgegebenen Zeitraums, nachdem die Zufuhr des Öldrucks zur zweiten hydraulischen Servoeinrichtung (92) durch die Öldruck-Zufuhreinrichtung (944) eingeleitet wurde, beginnt.

3. Steuerungssystem für ein Automatikgetriebe mit einer Hydraulikgetriebeeinheit zum Übertragen der Drehung eines Motors (10) auf eine Gangwechseleinheit (16), einer Kupplung (C1), die dafür ausgelegt ist, eingerückt zu werden, wenn ein Vorwärtsfahrbereich gewählt wird, einer ersten Einwegkupplung (F2), die dafür ausgelegt ist, verriegelt zu werden, wenn die Kupplung (C1) eingerückt wird, um einen ersten Vorwärtsgang einzurichten, einer ersten Bremse (B1) zum Verriegeln der Einwegkupplung (F2), die, wenn sie verriegelt ist, die Rückwärtsdrehung der Abtriebswelle (23) der Gangwechseleinheit (16) blockiert, und zum Festhalten eines Gangwechselelements, wenn sie bei den Gangstufen des zweiten Vorwärtsgangs oder höheren Gängen angewendet ist, einer zweiten Bremse (B2), die parallel zur ersten Bremse (B1) angeordnet ist, um das Gangwechselelement durch eine zweite Einwegkupplung (F1) festzuhalten, einer ersten hydraulischen Servoeinrichtung (91) zum Einrücken der Kupplung (C1), wenn ihr ein Öldruck zugeführt wird, einer zweiten hydraulischen Servoeinrichtung (92) zum Anwenden der ersten Bremse (B1), wenn ihr ein Öldruck zugeführt wird, einer dritten hydraulischen Servoeinrichtung zum Anwenden der zweiten Bremse (B2), wenn ihr ein Öldruck zugeführt wird, einem Fahrzeuggeschwindigkeits-Entsprechungswert-Sensor zum Erfassen eines der Fahrzeuggeschwindigkeit entsprechenden Werts, der sich entsprechend der Fahrzeuggeschwindigkeit ändert, und einer Steuereinheit (94) zum Steuern der der ersten hydraulischen Servoeinrichtung (91) und der zweiten hydraulischen Servoeinrichtung (92) zuzuführenden Öldrücke,
wobei die Steuereinheit (94) aufweist: eine Fahrzeuggeschwindigkeits-Entsprechungswert-Entscheidungseinrichtung zum Entscheiden, ob der der Fahrzeuggeschwindigkeit entsprechende Wert einen festgelegten Wert erreicht hat, eine Verzögerungsberechnungseinrichtung zum Berechnen der Verzögerung des Fahrzeugs auf der Grundlage des der Fahrzeuggeschwindigkeit entsprechenden Werts, bevor er den festgelegten Wert erreicht hat, eine Einrichtung zum Schätzen des Anhaltens des Fahrzeugs, um den Zeitpunkt des Anhaltens des Fahrzeugs auf der Grundlage der Verzögerung zu schätzen, wenn entschieden wird, daß der der Fahrzeuggeschwindigkeit entsprechende Wert den festgelegten Wert erreicht hat, eine Öldruck-Zufuhreinrichtung (944) zum Einleiten der Zufuhr des Öldrucks zur dritten hydraulischen Servoeinrichtung zu einem festgelegten Zeitpunkt, wenn der Vorwärtsfahrbereich gewählt wird, wenn sich der Motor (10) in einem Leerlaufzustand befindet und wenn sich die Fußbremse in einem aktiven Zustand befindet, und zum Beenden der Bewegung des Kolbens beim Kolbenhub der dritten hydraulischen Servoeinrichtung zum von der Einrichtung zum Schätzen des Anhaltens des Fahrzeugs geschätzten Zeitpunkt und nach diesem, ein Folgeventil, das dafür ausgelegt ist, ansprechend auf das Ansteigen des Öldrucks der dritten hydraulischen Servoeinrichtung geschaltet zu werden, um die Zufuhr des Öldrucks zur zweiten hydraulischen Servoeinrichtung (92) zu dem Zeitpunkt einzuleiten, zu dem die Bewegung des Kolbens beim Kolbenhub der dritten hydraulischen Servoeinrichtung endet, und eine Druckverringerungseinrichtung (943) zum Einleiten der Druckverringerung der ersten hydraulischen Servoeinrichtung (91) zu einem festgelegten Zeitpunkt und zum Einleiten des Schaltens aus dem eingerückten Zustand in den Schlupfzustand der Kupplung (C1) zu und nach dem Zeitpunkt, zu dem die Bewegung des Kolbens beim Kolbenhub der zweiten hydraulischen Servoeinrichtung (92) endet, so daß das Anwenden der ersten Bremse (B1) eingeleitet wird.

4. Steuerungssystem für ein Automatikgetriebe mit einer Hydraulikgetriebeeinheit zum Übertragen der Drehung eines Motors (10) auf eine Gangwechseleinheit (16), einer Kupplung (C1), die dafür ausgelegt ist, eingerückt zu werden, wenn ein Vorwärtsfahrbereich gewählt wird, einer ersten Einwegkupplung (F2), die dafür ausgelegt ist, verriegelt zu werden, wenn die Kupplung (C1) eingerückt wird, um einen ersten Vorwärtsgang einzurichten, einer ersten Bremse (B1) zum Verriegeln der Einwegkupplung (F2), die, wenn sie verriegelt ist, die Rückwärtsdrehung der Abtriebswelle (23) der Gangwechseleinheit (16) blockiert, und zum Festhalten eines Gangwechselelements, wenn sie bei den Gangstufen des zweiten Vorwärtsgangs oder höheren Gängen angewendet ist, einer zweiten Bremse (B2), die parallel zur ersten Bremse (B1) angeordnet ist, um das Gangwechselelement durch eine zweite Einwegkupplung (F1) festzuhalten, einer ersten hydraulischen Servoeinrichtung (91) zum Einrücken der Kupplung (C1), wenn ihr ein Öldruck zugeführt wird, einer zweiten hydraulischen Servoeinrichtung (92) zum Anwenden der ersten Bremse (B1), wenn ihr ein Öldruck zugeführt wird, einer dritten hydraulischen Servoeinrichtung zum Anwenden der zweiten Bremse (B2), wenn ihr ein Öldruck zugeführt wird, einem Fahrzeuggeschwindigkeits-Entsprechungswert-Sensor zum Erfassen eines der Fahrzeuggeschwindigkeit entsprechenden Werts, der sich entsprechend der Fahrzeuggeschwindigkeit ändert, und einer Steuereinheit (94) zum Steuern der der ersten hydraulischen Servoeinrichtung (91) und der zweiten hydraulischen Servoeinrichtung (92) zuzuführenden Öldrücke,
wobei die Steuereinheit (94) aufweist: eine Fahrzeuggeschwindigkeits-Entsprechungswert-Entscheidungseinrichtung zum Entscheiden, ob der der Fahrzeuggeschwindigkeit entsprechende Wert einen festgelegten Wert erreicht hat, eine Verzögerungsberechnungseinrichtung zum Berechnen der Verzögerung des Fahrzeugs auf der Grundlage des der Fahrzeuggeschwindigkeit entsprechenden Werts, bevor er den festgelegten Wert erreicht hat, eine Einrichtung zum Schätzen des Anhaltens des Fahrzeugs, um den Zeitpunkt des Anhaltens des Fahrzeugs auf der Grundlage der Verzögerung zu schätzen, wenn entschieden wird, daß der der Fahrzeuggeschwindigkeit entsprechende Wert den festgelegten Wert erreicht hat, eine Öldruck-Zufuhreinrichtung (944) zum Einleiten der Zufuhr des Öldrucks zur zweiten hydraulischen Servoeinrichtung (92) und zur dritten hydraulischen Servoeinrichtung zu einem festgelegten Zeitpunkt, wenn der Vorwärtsfahrbereich gewählt wird, wenn sich der Motor (10) in einem Leerlaufzustand befindet und wenn sich die Fußbremse in einem aktiven Zustand befindet, und zum Beenden der Bewegungen der Kolben bei den Kolbenhüben der zweiten hydraulischen Servoeinrichtung (92) und der dritten hydraulischen Servoeinrichtung zum von der Einrichtung zum Schätzen des Anhaltens des Fahrzeugs geschätzten Zeitpunkt und nach diesem, und eine Druckverringerungseinrichtung (943) zum Einleiten der Druckverringerung der ersten hydraulischen Servoeinrichtung (91) zu einem festgelegten Zeitpunkt und zum Einleiten des Schaltens aus dem eingerückten Zustand in den Schlupfzustand der Kupplung (C1) zu und nach dem Zeitpunkt, zu dem die Bewegungen der Kolben bei den Kolbenhüben der zweiten hydraulischen Servoeinrichtung (92) und der dritten hydraulischen Servoeinrichtung enden, so daß das Anwenden der ersten Bremse (B1) und der zweiten Bremse (B2) eingeleitet wird.

5. Steuerungssystem für ein Automatikgetriebe nach Anspruch 3 oder 4,
wobei die Druckverringerungseinrichtung (943) die Druckverringerung der ersten hydraulischen Servoeinrichtung (91) nach Verstreichen eines vorgegebenen Zeitraums, nachdem die Zufuhr des Öldrucks zur dritten hydraulischen Servoeinrichtung durch die Öldruck-Zufuhreinrichtung (944) eingeleitet wurde, beginnt.

6. Steuerungssystem für ein Automatikgetriebe nach einem der Ansprüche 1 bis 5,
wobei der vorgegebene Zeitraum entsprechend der Öltemperatur geändert wird.

7. Steuerungssystem für ein Automatikgetriebe nach einem der Ansprüche 1 bis 6,
wobei die Druckverringerungseinrichtung (943) die Kupplung (C1) nach dem Einleiten des Schaltens der Kupplung aus dem eingerückten Zustand in den Schlupfzustand löst.

## Revendications

1. Système de commande pour transmission automatique, comprenant : une unité de transmission à fluide pour transmettre la rotation d'un moteur (10) à une unité de changement de vitesses (16) ; un embrayage (C1) adapté pour être appliqué lorsqu'un rapport de marche avant est sélectionné ; un. embrayage unidirectionnel (F2) adapté pour être verrouillé, quand ledit embrayage (C1) est appliqué, pour établir une première vitesse avant ; un frein (B1) pour verrouiller ledit embrayage unidirectionnel, lorsqu'il est verrouillé, pour bloquer la rotation vers l'arrière de l'arbre de sortie (23) de ladite unité de changement de vitesses ; un premier servomécanisme hydraulique (91) pour appliquer ledit embrayage (C1) lorsqu'on lui transmet une pression d'huile ; un deuxième servomécanisme hydraulique (92) pour appliquer ledit frein (B1) lorsqu'on lui transmet une pression d'huile ; un capteur de valeur correspondant à la vitesse du véhicule pour détecter une valeur correspondant à la vitesse du véhicule qui change de manière à correspondre à la vitesse du véhicule ; et une unité de commande (94) pour commander les pressions d'huile à transmettre audit premier servomécanisme hydraulique (91) et audit deuxième servomécanisme hydraulique (92),
dans lequel ladite unité de commande (94) comprend : un moyen de décision de valeur correspondant à la vitesse du véhicule pour décider si ladite valeur correspondant à la vitesse du véhicule a atteint une valeur définie ; un moyen de calcul de décélération pour calculer la décélération du véhicule en se basant sur la valeur correspondant à la vitesse du véhicule avant d'avoir atteint ladite valeur définie ; un moyen d'estimation d'arrêt du véhicule pour estimer la durée nécessaire au véhicule pour s'arrêter en se basant sur ladite décélération, s'il est décidé que ladite valeur correspondant à la vitesse du véhicule a atteint ladite valeur définie ; un moyen d'alimentation en pression d'huile (944) pour commencer à alimenter ledit deuxième servomécanisme hydraulique (92) en pression d'huile à un instant défini, si le rapport de marche avant est sélectionné, si le moteur (10) est dans un état de ralenti et si le frein à pied est dans un état actif, et pour arrêter le mouvement du piston dans la course du piston dudit deuxième servomécanisme hydraulique (92) à et après l'instant estimé par ledit moyen d'estimation d'arrêt du véhicule ; et un moyen de réduction de pression (943) pour commencer la réduction de pression dudit premier servomécanisme hydraulique (91) à un instant défini et commencer le passage de l'état appliqué à l'état débrayé dudit embrayage (C1) à et après l'instant, dans lequel le mouvement du piston dans la course du piston dudit deuxième servomécanisme hydraulique (92) se termine de sorte que l'application dudit frein (B1) commence.

2. Système de commande pour transmission automatique selon la revendication 1, dans lequel ledit moyen de réduction de pression (943) commence la réduction de pression dudit premier servomécanisme hydraulique (91) après un laps de temps préalablement déterminé après que la transmission de la pression d'huile audit deuxième servomécanisme hydraulique (92) a été démarrée par ledit moyen d'alimentation en pression d'huile (944).

3. Système de commande pour transmission automatique, comprenant : une unité de transmission à fluide pour transmettre la rotation d'un moteur (10) à une unité de changement de vitesses (16) ; un embrayage (C1) adapté pour être appliqué lorsqu'un rapport de marche avant est sélectionné ; un embrayage unidirectionnel (F2) adapté pour être verrouillé, quand ledit embrayage (C1) est appliqué, pour établir une première vitesse avant ; un premier frein (B1) pour verrouiller ledit embrayage unidirectionnel (F2), lorsqu'il est verrouillé, pour bloquer la rotation vers l'arrière de l'arbre de sortie (23) de ladite unité de changement de vitesses (16), et pour retenir un élément de changement de vitesse lorsqu'il est appliqué à des rapports avant de 2^{e} vitesse ou de vitesses supérieures ; un deuxième frein (B2) placé en parallèle audit premier frein (B1) pour retenir ledit élément de changement de vitesse via un deuxième embrayage unidirectionnel (F1) ; un premier servomécanisme hydraulique (91) pour appliquer ledit embrayage (C1) lorsqu'on lui transmet une pression d'huile ; un deuxième servomécanisme hydraulique (92) pour appliquer ledit premier frein (B1) lorsqu'on lui transmet une pression d'huile ; un troisième servomécanisme hydraulique pour appliquer ledit deuxième frein (B2) lorsqu'on lui transmet une pression d'huile ; un capteur de valeur correspondant à la vitesse du véhicule pour détecter une valeur correspondant à la vitesse du véhicule qui change de manière à correspondre à la vitesse du véhicule ; et une unité de commande (94) pour commander les pressions d'huile à transmettre audit premier servomécanisme hydraulique (91) et audit deuxième servomécanisme hydraulique (92),
dans lequel ladite unité de commande (94) comprend : un moyen de décision de valeur correspondant à la vitesse du véhicule pour décider si ladite valeur correspondant à la vitesse du véhicule a atteint une valeur définie ; un moyen de calcul de décélération pour calculer la décélération du véhicule en se basant sur la valeur correspondant à la vitesse du véhicule avant d'avoir atteint ladite valeur définie; un moyen d'estimation d'arrêt du véhicule pour estimer la durée nécessaire au véhicule pour s'arrêter en se basant sur ladite décélération, s'il est décidé que ladite valeur correspondant à la vitesse du véhicule a atteint ladite valeur définie ; un moyen d'alimentation en pression d'huile (944) pour commencer à alimenter ledit troisième servomécanisme hydraulique en pression d'huile à un instant défini, si le rapport de marche avant est sélectionné, si le moteur (10) est dans un état de ralenti et si le frein à pied est dans un état actif, et pour arrêter le mouvement du piston dans la course du piston dudit troisième servomécanisme hydraulique à et après l'instant estimé par ledit moyen d'estimation d'arrêt du véhicule ; une vanne séquentielle adaptée pour être commutée en réponse à l'augmentation de la pression d'huile dudit troisième servomécanisme hydraulique pour démarrer l'alimentation dudit deuxième servomécanisme hydraulique (92) en pression d'huile à l'instant où le mouvement du piston dans la course de piston dudit troisième servomécanisme hydraulique se termine.; et un moyen de réduction de pression (943) pour commencer la réduction de pression dudit premier servomécanisme hydraulique (91) à un instant défini et commencer le passage de l'état appliqué à l'état débrayé dudit embrayage (C1) à et après l'instant, dans lequel le mouvement du piston dans la course du piston dudit deuxième servomécanisme hydraulique (92) se termine de sorte que l'application dudit premier frein (B1) commence.

4. Système de commande pour transmission automatique, comprenant : une unité de transmission à fluide pour transmettre la rotation d'un moteur (10) à une unité de changement de vitesses (16) ; un embrayage (C1) adapté pour être appliqué lorsqu'un rapport de marche avant est sélectionné ; un embrayage unidirectionnel (F2) adapté pour être verrouillé, quand ledit embrayage (C1) est appliqué, pour établir une première vitesse avant ; un premier frein (B1) pour verrouiller ledit embrayage unidirectionnel (F2), lorsqu'il est verrouillé, pour bloquer la rotation vers l'arrière de l'arbre de sortie (23) de ladite unité de changement de vitesses (16), et pour retenir un élément de changement de vitesse lorsqu'il est appliqué à des rapports avant de 2^{e} vitesse ou de vitesses supérieures ; un deuxième frein (B2) placé en parallèle audit premier frein (B1 pour retenir ledit élément de changement de vitesse via un deuxième embrayage unidirectionnel (F1) ; un premier servomécanisme hydraulique (91) pour appliquer ledit embrayage (C1) lorsqu'on lui transmet une pression d'huile ; un deuxième servomécanisme hydraulique (92) pour appliquer ledit premier frein (B1) lorsqu'on lui transmet une pression d'huile ; un troisième servomécanisme hydraulique pour appliquer ledit deuxième frein (B2) lorsqu'on lui transmet une prèssion d'huile ; un capteur de valeur correspondant à la vitesse du véhicule pour détecter une valeur correspondant à la vitesse du véhicule qui change de manière à correspondre à la vitesse du véhicule ; et une unité de commande (94) pour commander les pressions d'huile à transmettre audit premier servomécanisme hydraulique (91) et audit deuxième servomécanisme hydraulique (92),
dans lequel ladite unité de commande (94) comprend : un moyen de décision de valeur correspondant à la vitesse du véhicule pour décider si ladite valeur correspondant à la vitesse du véhicule a atteint une valeur définie ; un moyen de calcul de décélération pour calculer la décélération du véhicule en se basant sur la valeur correspondant à la vitesse du véhicule avant d'avoir atteint ladite valeur définie ; un moyen d'estimation d'arrêt du véhicule pour estimer la durée nécessaire au véhicule pour s'arrêter en se basant sur ladite décélération, s'il est décidé que ladite valeur correspondant à la vitesse du véhicule a atteint ladite valeur définie ; un moyen d'alimentation en pression d'huile (944) pour commencer à alimenter ledit deuxième servomécanisme hydraulique (92) et ledit troisième servomécanisme hydraulique en pression d'huile à un instant défini, si le rapport de marche avant est sélectionné, si le moteur (10) est dans un état de ralenti et si le frein à pied est dans un état actif, et pour arrêter le mouvement des pistons dans les courses de piston dudit deuxième servomécanisme hydraulique (92) et dudit troisième servomécanisme hydraulique à et après l'instant estimé par ledit moyen d'estimation d'arrêt du véhicule ; et un moyen de réduction de pression (943) pour commencer la réduction de pression dudit premier servomécanisme hydraulique (91) à un instant défini et commencer le passage de l'état appliqué à l'état débrayé dudit embrayage (C1) à et après l'instant, dans lequel le mouvement des pistons dans les courses de piston dudit deuxième servomécanisme hydraulique (92) et dudit troisième servomécanisme hydraulique se terminent de sorte que l'application dudit premier frein (B1) et dudit deuxième frein (B2) commence.

5. Système de commande pour transmission automatique selon la revendication 3 ou 4, dans lequel ledit moyen de réduction de pression (943) commence la réduction de pression dudit premier servomécanisme hydraulique (91) après un laps de temps préalablement déterminé après que la transmission de la pression d'huile audit troisième servomécanisme hydraulique a été démarrée par ledit moyen d'alimentation en pression d'huile (944).

6. Système de commande pour transmission automatique selon l'une quelconque des revendications 1 à 5, dans lequel le laps de temps préalablement déterminé est changé en fonction de la température d'huile.

7. Système de commande pour transmission automatique selon l'une quelconque des revendications 1 à 6, dans lequel ledit moyen de réduction de pression (943) libère ledit embrayage (C1) après le début du passage dudit embrayage de l'état appliqué à l'état débrayé.
